# EUROPÄISCHE PATENTANMELDUNG

(11) **EP 4 574 867 A1**
(43) Veröffentlichungstag der Anmeldung: **25.06.2025**
(21) Anmeldenummer: 23219508.1
(22) Anmeldetag: 21.12.2023
(51) Int. Cl.: C08G 18/10, C08G 18/12, C08G 18/18, C08G 18/20, C08G 18/24, C08G 18/28, C08G 18/34, C08G 18/48, C08G 18/50, C08G 18/75, C08G 18/76, C08G 18/78, C08K 3/22

(54) **HÄRTBARE POLYMERZUSAMMENSETZUNGEN ENTHALTEND ISOCYANATE, ALDIMINE UND VERBINDUNGEN MIT AKTIVIERTEN METHYLEN GRUPPEN**

(71) Anmelder: Sika Technology AG, 6340 Baar (CH)
(72) Erfinder: BURCKHARDT, Urs, 8049 Zürich (CH); HÄBERLE, Hans, 78262 Gailingen (DE); KRAMER, Andreas, 8008 Zürich (CH)
(74) Vertreter: Sika Patent Attorneys

(57) **Zusammenfassung**

Gegenstand der Erfindung ist eine härtbare Zusammensetzung umfassend mindestens ein Isocyanatgruppen-haltiges Polymer, mindestens ein Aldimin **L** mit Aldimingruppen der Formel (I) und mindestens eine Verbindung **V** mit aktivierten Methylengruppen der Formel (II), wobei bezogen auf die gesamte Zusammensetzung das Verhältnis der Anzahl Aldimingruppen der Formel (I) zur Anzahl Isocyanatgruppen höchstens 1 beträgt und das Verhältnis der Anzahl aktivierte Methylengruppen der Formel (II) zur Anzahl Aldimingruppen der Formel (I) mindestens 1 beträgt.

Die Zusammensetzung ist besonders geeignet als elastischer Klebstoff oder Dichtstoff. Sie härtet mit einfach zugänglichen Aldiminen auch ohne Einwirkung von Feuchtigkeit und ohne Blasenbildung zuverlässig zu einem elastischen Polymer, wobei mit Aldiminen abgeleitet von flüchtigen Aldehyden wie Benzaldehyd kein Geruch entsteht.

## Beschreibung

### Technisches Gebiet

Die Erfindung betrifft härtbare Polymerzusammensetzungen enthaltend Isocyanate, Aldimine und Verbindungen mit aktivierten Methylengruppen, sowie ihre Verwendung als elastische Klebstoffe oder Dichtstoffe.

### Stand der Technik

Feuchtigkeitshärtende Polymerzusammensetzungen auf der Basis von Isocyanaten und Aldiminen sind bekannt. Sie werden insbesondere als einkomponentige feuchtigkeitshärtende elastische Dichtstoffe, Klebstoffe oder Beschichtungen eingesetzt, beschrieben beispielsweise in US 7,625,993, US 9,752,054 oder US 10,647,807. Durch Kontakt mit Feuchtigkeit, insbesondere in Form von Luftfeuchtigkeit, reagieren die hydrolysierenden Aldimine mit vorhandenen Isocyanatgruppen unter Bildung von Harnstoffbindungen unter Freisetzung von Aldehyden. Spezielle Aldimine ermöglichen Zusammensetzungen mit guter Lagerstabilität, die mittels Luftfeuchtigkeit rasch und ohne Bildung von Blasen aushärten und gute mechanische Eigenschaften ermöglichen, insbesondere eine hohe Elastizität und Dehnbarkeit.

Diese bekannten Zusammensetzungen haben aber einige Nachteile. Entweder werden Aldimine eingesetzt, welche leichtflüchtige Aldehyde freisetzen. Bei der Aushärtung treten dann ein unerwünschter Geruch und Emissionen auf. Oder es werden Aldimine eingesetzt, welche schwerflüchtige und weitgehend geruchsfreie Aldehyde freisetzen, die auch nach der Aushärtung in der Zusammensetzung verbleiben. Solche Aldehyde können aber aus der Zusammensetzung migrieren und dadurch Verschmutzungen und Substratschäden verursachen, und sie wirken auf die Zusammensetzung typischerweise stark weichmachend, was für Anwendungen, wo eine erhöhte Steifigkeit bzw. ein hohes Elastizitätsmodul gefordert ist, unerwünscht sein kann. Eine weitere Schwierigkeit kann darin bestehen, dass die Aushärtung im Innern nur langsam oder gar nicht stattfindet, da die dafür benötigte Feuchtigkeit nicht in ausreichender Menge vorhanden ist, sei es durch klimatisch trockene Bedingungen oder mangelndem Zutritt von Luftfeuchtigkeit aufgrund von feuchtigkeitsdichten Substraten oder einer dickschichtigen Anwendung, wobei die Feuchtediffusion durch die dicker werdende ausgehärtete Polymerschicht behindert wird. Diese Schwierigkeit kann mittels Einsatz einer Wasser enthaltenden, sogenannten Booster-Komponente überwunden werden. Diese wird in eine ansonsten einkomponentige Zusammensetzung eingemischt, wodurch die Aushärtung besonders schnell und ohne Abhängigkeit der herrschenden Umgebungsfeuchte erfolgt. Das Einmischen einer wasserhaltigen und somit hydrophilen Booster-Komponente in eine zumeist pastöse und hydrophobe Polymerzusammensetzung kann aber infolge Unverträglichkeit zu Inhomogenitäten und somit verminderter Festigkeit führen.

US 5,288,804 beschreibt härtbare Polymerzusammensetzungen enthaltend Polyacetoacetate und Aldimine. Diese enthalten keine Isocyanate und bilden keine elastischen Polymere, wie sie für Polyurethane typisch sind.

US 5,714,563 beschreibt einkomponentige feuchtigkeitshärtende Polymerzusammensetzungen enthaltend Polyacetoacetate und Polyisocyanate. Diese enthalten keine Aldimine, sind mechanisch minderwertig und neigen zur Blasenbildung.

### Darstellung der Erfindung

Aufgabe der Erfindung ist es, eine Polymerzusammensetzung zur Verfügung zu stellen, die störungsfrei und ohne Geruch aushärtet und geeignet ist als elastischer Kleb- und/oder Dichtstoff mit hoher Elastizität und Festigkeit.

Diese Aufgabe wird überraschenderweise mit der härtbaren Zusammensetzung gemäss Anspruch 1 gelöst. Die härtbare Zusammensetzung enthält mindestens ein Isocyanatgruppen-haltiges Polymer, mindestens ein Aldimin L mit Aldimingruppen der Formel (I) und mindestens eine Verbindung V mit aktivierten Methylengruppen der Formel (II). Beim Vermischen der Bestandteile härtet die Zusammensetzung ohne Geruch und ohne Blasenbildung zu einem hochelastischen Produkt mit hoher Festigkeit aus. Dies gilt überraschenderweise auch dann, wenn Aldimine abgeleitet von flüchtigen Aldehyden wie Benzaldehyd eingesetzt werden. Besonders überraschend ist der Umstand, dass die Aushärtung auch ohne Wasserzutritt und nicht von aussen nach innen, sondern gleichzeitig durch den ganzen Materialquerschnitt erfolgt. Es macht den Anschein, dass das Aldimin nicht wie üblich durch Hydrolyse, sondern durch Reaktion mit der Verbindung **V** aktiviert, d.h. gegenüber Isocyanatgruppen reaktionsfähig, wird. Die Aushärtungsreaktion verläuft zuverlässig ohne Blasenbildung und ohne Geruchsbildung, da kein Aldehyd freigesetzt wird. Dieser verbleibt in derivatisierter Form, vermutlich als Addukt mit der Verbindung **V** oder Folgeprodukten davon, dauerhaft in der Zusammensetzung und zeigt keine Anzeichen von Migration. Die mechanischen Eigenschaften der ausgehärteten Zusammensetzung entsprechen weitgehend jenen einer entsprechenden, mit Feuchtigkeit ausgehärteten Zusammensetzung ohne Verbindung V. Die Derivate des Aldehyds scheinen also nicht weichmachend zu wirken und somit die Zusammensetzung nicht zu schwächen.

Bevorzugt enthält die härtbare Zusammensetzung als Beschleuniger für die Reaktion von Aldehydgruppen mit aktivierten Methylengruppen der Formel (I) einen Stickstoff-haltigen Katalysator. Dass die Zusammensetzung auch in Anwesenheit eines solchen Katalysators ohne Blasenbildung aushärtet, ist besonders überraschend, wird durch Stickstoff-haltige Katalysatoren wie zum Beispiel Triethylamin oder DBU doch auch die Reaktion von Isocyanatgruppen mit Wasser und somit die Freisetzung von CO₂ beschleunigt.

Die erfindungsgemässe Zusammensetzung härtet unabhängig von Feuchtigkeit auch in hohen Schichtdicken und zwischen feuchtigkeitsdichten Substraten ohne Emissionen, ohne Geruch und ohne Blasenbildung aus. Da keine Aldehyde freigesetzt werden, sind auch hohe Isocyanatgehalte möglich, und es können sehr hohe mechanische Festigkeiten und Elastizitätsmodule bei hoher Dehnbarkeit erreicht werden.

In einer bevorzugten Ausführungsform wird die erfindungsgemässe Zusammensetzung als Zweikomponentensystem mit lagerstabilen Komponenten eingesetzt. Besonders bevorzugt ist ein asymmetrisches Zweikomponentensystem mit einer ersten, mengenmässig dominierenden Komponente enthaltend das Isocyanatgruppen-haltige Polymer und das Aldimin **L,** welche mit Feuchtigkeit auch allein aushärtbar ist; und einer zweiten, sogenannten "Booster"-Komponente enthaltend die Verbindung **V** und gegebenenfalls einen Katalysator. Eine solche Booster-Komponente ist aufgrund der besseren Verträglichkeit bedeutend einfacher in die erste Komponente einmischbar, als dies mit einer klassischen Booster-Komponente auf Wasserbasis, wie sie typischerweise für die beschleunigte Aushärtung von einkomponentigen feuchtigkeitshärtenden Zusammensetzungen verwendet wird, möglich ist.

Die härtbare Zusammensetzung ist besonders geeignet als elastischer Klebstoff oder elastischer Dichtstoff.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine härtbare Zusammensetzung umfassend
- mindestens ein Isocyanatgruppen-haltiges Polymer,
- mindestens ein Aldimin **L** mit Aldimingruppen der Formel (I), 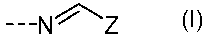 wobei Z für einen organischen Rest mit 1 bis 25 C-Atomen steht, und
- mindestens eine Verbindung **V** mit aktivierten Methylengruppen der Formel (II), 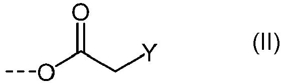 wobei Y für einen Rest der Formel ---CN oder 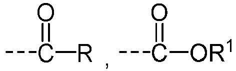 oder 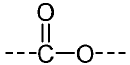 steht, R für einen einwertigen Kohlenwasserstoffrest mit 1 bis 10 C-Atomen steht und R¹ für einen Alkylrest mit 1 bis 6 C-Atomen steht,
wobei bezogen auf die gesamte Zusammensetzung das Verhältnis der Anzahl Aldimingruppen der Formel (I) zur Anzahl Isocyanatgruppen höchstens 1 beträgt und das Verhältnis der Anzahl aktivierte Methylengruppen der Formel (II) zur Anzahl Aldimingruppen der Formel (I) mindestens 1 beträgt.

Eine gestrichelte Linie in den Formeln in diesem Dokument stellt jeweils die Bindung zwischen einem Substituenten und dem zugehörigen Molekülrest dar. Mit "Poly" beginnende Substanznamen wie Polyisocyanat oder Polyol bezeichnen Substanzen, die formal zwei oder mehr der in ihrem Namen vorkommenden funktionellen Gruppen pro Molekül enthalten.

Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts (Mₙ) einer polydispersen Mischung von oligomeren oder polymeren Molekülen oder Molekül-Resten bezeichnet. Es wird mittels Gelpermeationschromatographie (GPC) gegen Polystyrol als Standard bestimmt.

Als "lagerstabil" wird eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "NCO-Gehalt" wird der Gehalt an Isocyanatgruppen in Gewichts-% bezeichnet. Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Bevorzugt ist das Isocyanatgruppen-haltige Polymer bei Raumtemperatur flüssig. Bevorzugt ist es niedrigviskos und hat insbesondere eine Viskosität von 0.5 bis 50 Pa s, bevorzugt 1 bis 30 Pa s, insbesondere 1 bis 20 Pa s, bestimmt bei 20 °C mittels Kegel-Platte-Viskosimeter mit Kegeldurchmesser 10 mm, Kegelwinkel 1° und Kegel-Platte-Abstand 0.05 mm bei einer Scherrate von 10 s⁻¹.

Bevorzugt hat das Isocyanatgruppen-haltige Polymer einen NCO-Gehalt bezogen auf das gesamte Polymer von 0.5 bis 8 Gewichts-%, bevorzugt 0.75 bis 5 Gewichts-%, insbesondere 1 bis 3 Gewichts-%. Ein solches Polymer ermöglicht eine hohe Dehnbarkeit der ausgehärteten Zusammensetzung.

Bevorzugt hat das Isocyanatgruppen-haltige Polymer eine mittlere Isocyanat-Funktionalität von 1.7 bis 4.0, insbesondere 1.8 bis 3.0.

Bevorzugt hat das Isocyanatgruppen-haltige Polymer ein mittleres Molekulargewicht Mₙ von 1'000 bis 20'000 g/mol, 2'000 bis 15'000 g/mol, insbesondere 4'000 bis 10'000 g/mol.

Bevorzugt wird das Isocyanatgruppen-haltige Polymer erhalten aus der Umsetzung von mindestens einem Polyol mit mindestens einem Diisocyanat.

Bevorzugt ist das Diisocyanat ein handelsübliches aliphatisches, cycloaliphatisches oder aromatisches Diisocyanat, wie insbesondere 1,6-Hexandiisocyanat (HDI), Isophorondiisocyanat (IPDI), Perhydro-4,4'-diphenylmethandiisocyanat (H₁₂MDI), Perhydro-2,4(6)-toluendiisocyanat (H₆TDI), 2,2(4),4-trimethyl-1,6-hexandiisocyanat (TMDI), Cyclohexan-1,3-diisocyanat, Cyclohexan-1,4-diisocyanat, 1,3-Bis(isocyanatomethyl)cyclohexan, 1,4-Bis(isocyanatomethyl)cyclohexan, m-Xylendiisocyanat, p-Xylendiisocyanat, 2,4(6)-Toluendiisocyanat (TDI), Diphenylmethandiisocyanat (MDI), 1,4-Phenylendiisocyanat (PDI) oder Naphthalin-1,5-diisocyanat (NDI).

Besonders bevorzugt ist IPDI, HDI, H₁₂MDI, MDI oder TDI, insbesondere IPDI, MDI oder TDI.

Als TDI bevorzugt sind Mischungen enthaltend 2,4-Toluendiisocyanat und 2,6-Toluendiisocyanat, insbesondere Mischungen aus 80 Gewichtsteilen 2,4-Toluendiisocyanat und 20 Gewichtsteilen 2,6-Toluendiisocyanat.

Als MDI bevorzugt ist 4,4'-Diphenylmethandiisocyanat, sowie handelsübliche Mischungen enthaltend 4,4'-Diphenylmethandiisocyanat und Anteile von 2,4'- und/oder 2,2'-Diphenylmethandiisocyanat. Besonders bevorzugt ist 4,4'-Diphenylmethandiisocyanat mit einer Reinheit von mindestens 98 Gewichts-%.

Geeignete Polyole sind handelsübliche Polyole oder Mischungen davon, insbesondere
- Polyetherpolyole, insbesondere Polyoxyalkylendiole und/oder Polyoxyalkylentriole, wobei Triole bevorzugt gestartet sind auf 1,1,1-Trimethylolpropan oder Glycerin, sowie Polyetherpolyole mit darin dispergierten Polymerpartikeln, insbesondere solche mit Styrol-Acrylnitril-Partikeln (SAN) oder Polyharnstoff- bzw. Polyhydrazodicarbonamid-Partikeln (PHD),
- Polyesterpolyole, insbesondere aus der Polykondensation von Hydroxycarbonsäuren bzw. Lactonen oder der Polykondensation von aliphatischen und/oder aromatischen Polycarbonsäuren mit zwei- oder mehrwertigen Alkoholen,
- Polycarbonatpolyole,
- Polyetherpolyesterpolyole,
- Polyacrylat- oder Polymethacrylatpolyole,
- polyhydroxyfunktionelle Fette oder Öle, beispielsweise natürliche Fette und Öle, inbesondere Ricinusöl; oder durch chemische Modifizierung von natürlichen Fetten und Ölen gewonnene - sogenannte oleochemische - Polyole,
- Polykohlenwasserstoffpolyole, insbesondere hydroxyfunktionelle Polyolefine, Polyisobutylene oder Polyisoprene, weiterhin hydroxyfunktionelle Ethylen-Propylen-Copolymere, Ethylen-Butylen- Copolymere oder Ethylen-Propylen-Dien-Copolymere, wie sie beispielsweise von der Firma Kraton Polymers hergestellt werden, weiterhin hydroxyfunktionelle Polymere von Dienen, insbesondere von 1,3-Butadien, weiterhin hydroxyfunktionelle Copolymere aus Dienen und Vinylmonomeren wie Styrol, Acrylnitril, Vinylchlorid, Vinylacetat, Vinylalkohol, Isobutylen oder Isopren, sowie hydrierte hydroxyfunktionelle Polymere oder Copolymere von Dienen.

Geeignet sind insbesondere auch Mischungen von Polyolen.

Bevorzugt sind Polyole mit einer mittleren OH-Funktionalität von 1.7 bis 3.

Bevorzugt sind Polyetherpolyole, Polyesterpolyole, Polycarbonatpolyole oder Polyacrylatpolyole. Besonders bevorzugt sind Polyetherpolyole oder Polyesterpolyole, insbesondere Polyetherpolyole.

Bevorzugt sind Polyetherpolyole mit Repetiereinheiten ausgewählt aus Oxy-1,2-ethylen, Oxy-1,2-propylen, Oxy-1,3-propylen, Oxy-1,4-butylen, Oxy-1,2-butylen und Oxyphenylethylen, wobei gegebenenfalls zusätzlich Oxy-1,2-ethylen vorhanden sind, insbesondere bis zu 25 Gewichts-% Oxy-1,2-ethylen-Einheiten bezogen auf das Polyetherpolyol.

Bevorzugt sind Polyetherpolyole mit einem niedrigen Gehalt an Ungesättigtheit (sogenannte "low monol" und "ultra low monol" Polyole), insbesondere von weniger als 0.02 mEq/g, bevorzugt weniger als 0.01 mEq/g.

Besonders bevorzugt sind Polyetherpolyole mit Oxy-1,2-propylen-Repetiereinheiten, gegebenenfalls mit bis zu 25 Gewichts-%, bezogen auf das Gesamtgewicht des Polyetherpolyols, Oxy-1,2-ethylen-Einheiten an den Kettenenden (auch "Ethylenoxid-terminierte" oder "EO-terminierte" Polyetherpolyole genannt).

Besonders bevorzugt sind Poly(oxy-1,2-propylen)diole oder -triole, welche gegebenenfalls EO-terminiert sind, mit einer OH-Zahl von 7 bis 175 mg KOH/g, bevorzugt 10 bis 145 mg KOH/g, insbesondere 14 bis 112 mg KOH/g, und/oder mit einem mittleren Molekulargewicht Mₙ von 1'000 bis 12'000 g/mol, bevorzugt 2'000 bis 8'000 g/mol.

Weiterhin bevorzugt sind Polyetherpolyole mit Oxy-1,4-butylen-Repetiereinheiten, insbesondere Poly(oxy-1,4-butylen)diole mit einer OH-Zahl von 50 bis 175 mg KOH/g und/oder einem mittleren Molekulargewicht Mₙ von 650 bis 2'000 g/mol.

Bevorzugt enthält das Isocyanatgruppen-haltige Polymer Polyetherketten mit Repetiereinheiten ausgewählt aus der Liste bestehend aus Oxy-1,2-propylen, Oxy-1,3-propylen, Oxy-1,4-butylen, Oxy-1,2-butylen und Oxyphenylethylen. Dabei können zusätzlich Oxy-1,2-ethylen-Einheiten enthalten sein, insbesondere bis zu 25 Gewichts-% Oxy-1,2-ethylen-Einheiten bezogen auf das Gesamtgewicht der Polyetherketten, wobei sich die Oxy-1,2-ethylen-Einheiten bevorzugt an den Kettenenden der Polyetherketten befinden.

Bevorzugte Polyetherketten sind Poly(oxy-1,2-propylen)-Ketten, welche gegebenenfalls EO-terminiert sind.

Besonders bevorzugt enthält die härtbare Zusammensetzung ein Isocyanatgruppen-haltiges Polymer mit Polyetherketten und einem NCO-Gehalt bezogen auf das gesamte Polymer von 1 bis 3 Gewichts-%.

Das Isocyanatgruppen-haltige Polymer wird bevorzugt durch Umsetzung von mindestens einem monomeren Diisocyanat mit mindestens einem Polyol in einem Molverhältnis NCO/OH von mindestens 1.3, bevorzugt mindestens 1.5, insbesondere mindestens 1.8, hergestellt, bevorzugt unter Ausschluss von Feuchtigkeit bei 20 bis 160 °C, insbesondere 40 bis 140 °C, gegebenenfalls in Anwesenheit eines geeigneten Katalysators.

Ein besonders bevorzugtes Isocyanatgruppen-haltiges Polymer hat bezogen auf das gesamte Polymer einen Gehalt an monomeren Diisocyanaten von weniger als 0.5 Gewichts-%, bevorzugt weniger als 0.3 Gewichts-%, insbesondere weniger als 0.2 Gewichts-%. Dies ermöglicht härtbare Zusammensetzungen mit einem Gehalt von weniger 0.1 Gewichts-%, bezogen auf die gesamte Zusammensetzung, an monomeren Diisocyanaten. Solche Zusammensetzungen sind besonders sicher im Gebrauch und sind nicht kennzeichnungspflichtig.

Ein Isocyanatgruppen-haltiges Polymer mit besonders niedrigem Gehalt an monomeren Diisocyanaten wird bevorzugt hergestellt mit einem molaren NCO/OH Verhältnis von 3/1 bis 10/1, bevorzugt 3/1 bis 8/1, und nachfolgender Entfernung von nicht umgesetztem monomeren Diisocyanat mittels Destillation, bevorzugt mittels Dünnfilmdestillation oder Kurzwegdestillation, bevorzugt unter Vakuum.

Die härtbare Zusammensetzung kann ein oder mehr als ein Isocyanatgruppen-haltiges Polymer enthalten.

Die härtbare Zusammensetzung enthält weiterhin mindestens ein Aldimin L mit Aldimingruppen der Formel (I).

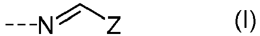

Bevorzugt hat das Aldimin **L** zwei bis drei Aldimingruppen der Formel (I). Bevorzugt hat das Aldimin **L** ein Aldimin-Equivalentgewicht von 110 bis 500 g/eq.

Bevorzugt steht Z für einen über ein primäres oder sekundäres C-Atom gebundenen aliphatischen Kohlenwasserstoffrest mit 3 bis 11 C-Atomen oder für einen aromatischen oder heteroaromatischen fünf- oder sechsgliedrigen Ring, der gegebenenfalls substituiert und/oder anelliert ist und insgesamt 4 bis 25 C-Atome umfasst.

Insbesondere ist Z ausgewählt aus der Liste bestehend aus 1-Propyl, 2-Propyl, 1-Butyl, 1-Pentyl, 1-Heptyl, 3-Heptyl, 1-Undecyl, Phenyl, 2-Methylphenyl, 3-Methylphenyl, 4-Methylphenyl, 4-Ethylphenyl, 4-Isopropylphenyl, 4-tert-Butylphenyl, 4-C₁₀₋₁₄-Alkylphenyl, 2,5-Dimethylphenyl, 2-Methoxyphenyl, 3-Methoxyphenyl, 4-Methoxyphenyl, 2-Ethoxyphenyl, 3-Ethoxyphenyl, 4-Ethoxyphenyl, 4-Propoxyphenyl, 4-Isopropoxyphenyl, 4-Butoxyphenyl, 4-Pentoxyphenyl, 4-Decyloxyphenyl, 4-Dodecyloxyphenyl, 2,3-Dimethoxyphenyl, 2,4-Dimethoxyphenyl, 2,5-Dimethoxyphenyl, 3,4-Dimethoxyphenyl, 3,5-Dimethoxyphenyl, 2,4,6-Trimethylphenyl, 2,4,5-Trimethoxyphenyl, 2,4,6-Trimethoxyphenyl, 3,4,5-Trimethoxyphenyl, 1-Naphthyl, 2-Naphthyl, 2-Furyl, 5-Methyl-2-furyl, Thiophen, Pyridin, Pyrrol und Chinolin.

Davon bevorzugt sind Phenyl, die isomeren Methylphenyle, 4-C₁₀₋₁₄-Alkylphenyl, 4-Methoxyphenyl, 3,4-Dimethoxyphenyl oder 2-Furyl.

Am meisten bevorzugt steht Z für Phenyl. Solche Aldimine sind abgeleitet von Benzaldehyd. Sie sind besonders einfach zugänglich und ermöglichen eine besonders schnelle und zuverlässige Aushärtung.

Weiterhin bevorzugt steht Z für einen 4-C₁₀₋₁₄-Alkylphenyl-Rest. Solche Aldimine sind abgeleitet von einem 4-C₁₀₋₁₄-Alkyl-benzaldehyd-Gemisch. Sie sind geruchlos und ermöglichen somit asymmetrische zweikomponentige Zusammensetzungen, deren erste Komponente durch Einwirkung von Feuchtigkeit auch ohne Zumischung der Booster-Komponente enthaltend die Verbindung **V** geruchsfrei aushärten.

Aldimine abgeleitet von flüchtigen Aldehyden wie Benzaldehyd verursachen bei der Anwendung als latenter Härter in Polyurethanzusammensetzungen einen starken, unangenehmen Geruch. Dieser schränkt die Anwendbarkeit solcher Zusammensetzungen stark ein, da der Geruch schon während der Applikation auftritt und auch noch lange danach anhält. Mit der erfindungsgemässen Zusammensetzung hingegen entsteht überraschenderweise kein Aldehyd-Geruch, was besonders vorteilhaft ist, da die Zusammensetzung ohne Einschränkung auch in geruchssensitiven Anwendungen eingesetzt werden kann, beispielsweise in Gebäudeinnenräumen oder in Automobilen.

Bevorzugt als Aldimin L ist ein Aldimin der Formel (III), 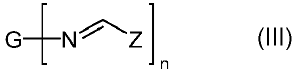 wobei n für 2 oder 3 und G für einen n-wertigen organischen Rest mit 2 bis 25 C-Atomen stehen und Z die bereits genannten Bedeutungen aufweist.

Bevorzugt steht G für einen zweiwertigen Kohlenwasserstoffrest mit 2 bis 15 C-Atomen, insbesondere 5 bis 15 C-Atomen, oder für einen zwei- oder dreiwertigen Polyoxyalkylen-Rest mit einem mittleren Molekulargewicht Mₙ von 160 bis 500 g/mol.

Das Aldimin der Formel (III) ist typischerweise abgeleitet von einem primären Amin und einem Aldehyd der Formel 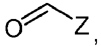 aus welchen es durch eine Kondensationsreaktion erhältlich ist.

Als primäres Amin bevorzugt sind handelsübliche aliphatische oder cycloaliphatische primäre Amine, insbesondere ausgewählt aus der Liste bestehend aus 1,2-Ethandiamin, 1,2-Propandiamin, 1,3-Propandiamin, 1,4-Butandiamin, 1,5-Pentandiamin, 2,2-Dimethyl-1,3-propandiamin, 1,3-Pentandiamin (DAMP), 1,6-Hexandiamin, 1,5-Diamino-2-methylpentan (MPMD), 1,7-Heptandiamin, 1,8-Octandiamin, 2,5-Dimethyl-1,6-hexandiamin, 1,9-Nonandiamin, 2,2(4),4-Trimethyl-1,6-hexandiamin (TMD), 1,10-Decandiamin, 1,11-Undecandiamin, 2-Butyl-2-ethyl-1,5-pentandiamin (C11-Neodiamin), 1,12-Dodecandiamin, 1,2-Diaminocyclohexan, 1,3-Diaminocyclohexan, 1,4-Diaminocyclohexan, 1,3-Bis(aminomethyl)cyclohexan, 1,4-Bis(aminomethyl)cyclohexan, 1,3-Bis(aminomethyl)benzol (MXDA), Isophorondiamin (IPDA), 2(4)-Methyl-1,3-diaminocyclohexan, Bis(4-aminocyclohexyl)-methan, 2,5(6)-Bis(aminomethyl)bicyclo[2.2.1]heptan (NBDA), 3(4),8(9)-Bis(aminomethyl)tricyclo[5.2.1.0^{2,6}]decan (TCD-Diamin), 4,9-Dioxadodecan-1,12-diamin, 4,7,10-Trioxatridecan-1,13-diamin, Polyoxypropylendiaminen mit einem mittleren Molekulargewicht Mₙ von 200 bis 500 g/mol und Polyoxypropylentriaminen mit einem mittleren Molekulargewicht Mₙ von 300 bis 500 g/mol.

Bevorzugte Polyoxypropylendi- oder-triamine sind Jeffamine^{®} D-230, Jeffamine^{®} D-400 oder Jeffamine^{®} T-403 (alle von Huntsman), sowie entsprechende Typen von BASF oder Nitroil.

Als Aldehyd der Formel 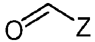 bevorzugt sind Butanal, Isobutyraldehyd, Valeraldehyd, Hexanal, Octanal, 2-Ethylhexanal, Dodecanal, Benzaldehyd, 2-Tolualdehyd, 3-Tolualdehyd, 4-Tolualdehyd, 4-Ethylbenzaldehyd, 4-Isopropyl-benzaldehyd, 4-tert-Butylbenzaldehyd, 4-C₁₀₋₁₄-Alkylbenzaldehyd, 2,5-Dimethylbenzaldehyd, 2-Methoxybenzaldehyd, 3-Methoxybenzaldehyd, 4-Methoxybenzaldehyd, 2-Ethoxybenzaldehyd, 3-Ethoxybenzaldehyd, 4-Ethoxybenzaldehyd, 4-Propoxybenzaldehyd, 4-Isopropoxybenzaldehyd, 4-Butoxybenzaldehyd, 4-Pentoxybenzaldehyd, 4-Decyloxybenzaldehyd, 4-Dodecyloxybenzaldehyd, 2,3-Dimethoxybenzaldehyd, 2,4-Dimethoxybenzaldehyd, 2,5-Dimethoxybenzaldehyd, 3,4-Dimethoxybenzaldehyd, 3,5-Dimethoxybenzaldehyd, 2,4,6-Trimethylbenzaldehyd, 2,4,5-Trimethoxybenzaldehyd, 2,4,6-Trimethoxybenzaldehyd, 3,4,5-Trimethoxybenzaldehyd, 1-Naphthaldehyd, 2-Naphthaldehyd, Furfural oder 5-Methylfurfural.

Davon bevorzugt sind aromatische oder heteroaromatische Aldehyde.

Besonders bevorzugt ist Benzaldehyd, die isomeren Tolualdehyde, ein 4-C₁₀₋₁₄-Alkylbenzaldehyd-Gemisch, 4-Methoxybenzaldehyd, 3,4-Dimethoxybenzaldehyd oder Furfural.

Am meisten bevorzugt ist Benzaldehyd.

Aldimine der Formel (III) abgeleitet von aromatischen Aldehyden wie insbesondere Benzaldehyd zeigen teilweise eine deutliche Neigung zum Kristallisieren. Bevorzugt sind Aldimine der Formel (III), welche als solche oder als Mischung untereinander bei Raumtemperatur ohne Zusatz von Lösemitteln oder Verdünnern dauerhaft flüssig sind. Solche Aldimine ermöglichen Zusammensetzungen mit geringer Emission.

Besonders bevorzugte Aldimine der Formel (III) sind ausgewählt aus der Liste bestehend aus N,N'-Dibenzyliden-1,5-pentandiamin, N,N'-Dibenzyliden-1,6-hexandiamin, N,N'-Dibenzyliden-2-methyl-1,5-pentandiamin, N,N'-Dibenzyliden-2,2(4),4-trimethyl-1,6-hexandiamin, N,N'-Dibenzyliden-1,3-bis(aminomethyl)cyclohexan, N,N'-Dibenzyliden-1,3-bis(aminomethyl)benzol, N,N'-Dibenzylidenisophorondi-amin, N,N'-Dibenzyliden-4,4'-methylen-bis(cyclohexylamin), N,N'-Dibenzyliden-polyoxypropylendiaminen mit mittlerem Molekulargewicht Mₙ von 350 bis 750 g/mol und N,N',N"-Tribenzylidenpolyoxypropylentriaminen mit mittlerem Molekulargewicht Mₙ von 450 bis 700 g/mol, sowie den analogen Aldiminen abgeleitet von Tolualdehyd, einem 4-C₁₀₋₁₄-Alkylbenzaldehyd-Gemisch, 4-Methoxybenzaldehyd und Furfural anstelle von Benzaldehyd.

Davon bevorzugt sind N,N'-Dibenzyliden-1,5-pentandiamin, N,N'-Dibenzyliden-2-methyl-1,5-pentandiamin, N,N'-Dibenzyliden-1,6-hexandiamin, N,N'-Dibenzyliden-2,2(4),4-trimethyl-1,6-hexandiamin, N,N'-Dibenzylidenpolyoxypropylendiaminen mit mittlerem Molekulargewicht Mₙ von 350 bis 700 g/mol oder N,N'-Bis(4-C₁₀₋₁₄-Alkyl-benzyliden)isophorondiamin.

Die härtbare Zusammensetzung enthält weiterhin mindestens eine Verbindung V mit aktivierten Methylengruppen der Formel (II), 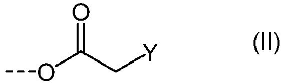 wobei Y für einen Rest der Formel ---CN , 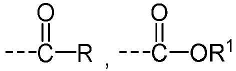 oder 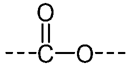 steht.

Bevorzugt steht R für einen Alkylrest mit 1 bis 6 C-Atomen oder für Phenyl, besonders bevorzugt für Methyl, Ethyl, Propyl, Isopropyl, Butyl oder Phenyl. Am meisten bevorzugt steht R für Methyl.

Bevorzugt steht R¹ für Methyl, Ethyl oder tert-Butyl, besonders bevorzugt für Ethyl oder tert-Butyl, insbesondere für Ethyl.

Bevorzugt enthält die Verbindung **V** eine bis sechs aktivierte Methylengruppen der Formel (II), besonders bevorzugt zwei bis vier, insbesondere zwei bis drei, aktivierte Methylengruppen der Formel (II).

Bevorzugt weist die Verbindung **V** ein Molekulargewicht, oder im Fall einer oligomeren oder polymeren Verbindung **V** mittleres Molekulargewicht Mₙ, von 100 bis 10'000 g/mol, bevorzugt 196 bis 5'000 g/mol, besonders bevorzugt 240 bis 2'500 g/mol, insbesondere 240 bis 1'500 g/mol, auf.

Bevorzugt ist die Verbindung **V** bei Raumtemperatur flüssig. Insbesondere weist sie eine Viskosität bei 20 °C von 0.01 bis 50 Pa s, mehr bevorzugt 0.01 bis 25 Pa s, besonders bevorzugt 0.01 bis 10 Pa s, insbesondere 0.02 bis 5 Pa s, auf, gemessen mittels Kegel-Platte Viskosimeter mit Kegeldurchmesser 10 mm, Kegelwinkel 1°, Kegelspitze-Platte-Abstand 0.05 mm, Scherrate 10 s⁻¹, für Viskositäten von weniger als 0.5 Pa s mit Kegeldurchmesser 50 mm. Eine solche Verbindung ermöglicht Zusammensetzungen, die bei Umgebungstemperatur ohne Zusatz von Lösemitteln oder Verdünnern gut verarbeitbar sind.

Bevorzugt weist die Verbindung **V** in Bezug auf die aktivierten Methylengruppen der Formel (II) ein Equivalentgewicht, oder im Fall einer oligomeren oder polymeren Verbindung **V** mittleres Equivalentgewicht, von 100 bis 2'100 g/eq, bevorzugt 114 bis 600 g/eq, insbesondere 114 bis 400 g/eq, auf.

Bevorzugt weist die Verbindung **V** in Bezug auf die aktivierten Methylengruppen der Formel (II) eine Funktionalität, oder im Fall einer oligomeren oder polymeren Verbindung **V** mittlere Funktionalität, von 1 bis 4, bevorzugt 1.5 bis 3.5, insbesondere 1.8 bis 3, auf.

Insbesondere weist die Verbindung **V** in Bezug auf die aktivierten Methylengruppen der Formel (II) ein Equivalentgewicht, oder im Fall einer oligomeren oder polymeren Verbindung **V** mittleres Equivalentgewicht, von 100 bis 2'100 g/eq, bevorzugt 114 bis 600 g/eq, insbesondere 114 bis 400 g, und eine Funktionalität, oder im Fall einer oligomeren oder polymeren Verbindung **V** mittlere Funktionalität, von 1 bis 4, bevorzugt 1.5 bis 3.5, insbesondere 1.8 bis 3, auf.

Bevorzugt liegt das Verhältnis der Anzahl aktivierte Methylengruppen der Formel (II) zur Anzahl Aldimingruppen der Formel (I) im Bereich von 1 bis 4, bevorzugt 1.2 bis 3, besonders bevorzugt 1.5 bis 2.5. Dies ermöglicht die Aktivierung der Aldimingruppen ohne Zutritt von Feuchtigkeit, wobei der dem Aldimin zugrunde liegende Aldehyd nicht freigesetzt wird. Dadurch entsteht bei der Verwendung der härtbaren Zusammensetzung kein störender Aldehyd-Geruch.

Bevorzugt wird die Verbindung **V** erhalten aus der Umesterung von mindestens einer Hydroxylgruppen-haltigen Verbindung mit mindestens einer Verbindung der Formel (IV), 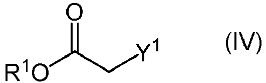 wobei Y¹ für einen Rest der Formel ---CN , 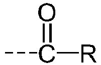 oder 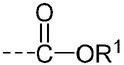 steht und R und R¹ die bereits beschriebenen Bedeutungen aufweisen.

Bevorzugt erfolgt die Umesterung bei einer Temperatur von 50 bis 150 °C unter destillativer Entfernung des freigesetzten Alkohols R¹OH und gegebenenfalls Fragmentierungsprodukten davon, gegebenenfalls unter Vakuum und gegebenenfalls in Anwesenheit von Katalysatoren.

Weiterhin möglich ist die Herstellung einer Verbindung **V** mit Cyanoacetatgruppen durch Veresterung von Cyanoessigsäure mit mindestens einer Hydroxylgruppen-haltigen Verbindung.

Weiterhin möglich ist die Herstellung einer Verbindung **V** mit Acetoacetatgruppen, indem die der Verbindung **V** zugrunde liegende Hydroxylgruppen-haltige Verbindung mit Diketen oder dem Addukt von Diketen mit Aceton (= 2,2,6-Trimethyl-4H-1,3-dioxin-4-on) umgesetzt wird, wobei im Fall des Aceton-Diketen-Addukts Aceton freigesetzt wird.

Weiterhin möglich ist die Herstellung einer Verbindung **V** mit Malonatgruppen durch Veresterung von Malonsäure mit mindestens einer Hydroxylgruppen-haltigen Verbindung.

Als Verbindung der Formel (IV) geeignet ist insbesondere Methylcyanoacetat, Ethylcyanoacetat, tert-Butylcyanoacetat, Methylacetoacetat, Ethylacetoacetat, tert-Butylacetoacetat, Ethyl-3-oxohexanoat, Ethylbenzoylacetat, Malonsäuredimethylester, Malonsäurediethylester, Malonsäurediisopropylester oder Malonsäuredi-(tert-butylester).

Bevorzugt ist Ethylcyanoacetat oder tert-Butylcyanoacetat, Ethylacetoacetat oder tert-Butylacetoacetat, sowie Malonsäurediethylester.

Als Hydroxylgruppen-haltige Verbindung bevorzugt sind handelsübliche OH-funktionelle Verbindungen oder Polymere, wie insbesondere 1,2-Ethandiol, Diethylenglykol, Triethylenglykol, 1,2-Propandiol, Dipropylenglykol, Tripropylenglykol, 1,3-Propandiol, 1,4-Butandiol, 1,2-Butandiol, 2-Methyl-1,3-propandiol, 1,5-Pentandiol, 1,2-Pentandiol, Neopentylglykol, 2-Methyl-1,4-butandiol, 1,6-Hexandiol, 3-Methyl-1,5-pentandiol, 1,8-Octandiol, 1,10-Decandiol, 1,12-Dodecandiol, Polytetrahydrofurandiole, 1,3-Cyclohexandimethanol, 1,4-Cyclohexandimethanol, 1,1,1-Trimethylolethan, 1,1,1-Trimethylolpropan, Glycerin, Pentaerythrit, ethoxyliertes oder insbesondere propoxyliertes Glycerin, ethoxyliertes oder insbesondere propoxyliertes 1,1,1-Trimethylolpropan, Poly(oxy-1,2-propylen)diole mit mittlerem Molekulargewicht von 400 bis 4'000 g/mol, EO-terminierte Poly(oxy-1,2-propylen)diole mit mittlerem Molekulargewicht von 1'000 bis 4'000 g/mol, Poly(oxy-1,2-propylen)triole mit mittlerem Molekulargewicht von 400 bis 6'000 g/mol, EO-terminierte Poly(oxy-1,2-propylen)triole mit mittlerem Molekulargewicht von 3'000 bis 6'000 g/mol, Di- oder Trimerfettsäure-basierte Polyesterpolyole mit mittlerem Molekulargewicht von 1'000 bis 3'000 g/mol, Rizinusöl, Derivate von Rizinusöl oder hydroxylierte Pflanzenöle.

In einer bevorzugten Ausführungsform der Erfindung steht Y für einen Rest der Formel ---CN und die aktivierten Methylengruppen der Formel (II) sind somit Cyanoacetatgruppen.

Bevorzugt ist eine Verbindung **V** mit Cyanoacetatgruppen ausgewählt aus der Liste bestehend aus Ethylcyanoacetat, dem Tricyanoacetat von ethoxyliertem und/oder propoxyliertem 1,1,1-Trimethylolpropan, dem Tricyanoacetat von ethoxyliertem und/oder propoxyliertem Glycerin, Poly(oxy-1,2-propylen)diol-bis(cyanoacetat), Ethylenoxid-Einheiten enthaltendem Poly(oxy-1,2-propylen)diol-bis(cyanoacetat), Dimerfettsäure-basiertem Polyesterdiol-bis(cyanoacetat) und Trimerfettsäure-basiertem Polyestertriol-tris(cyanoacetat).

In einer weiteren besonders bevorzugten Ausführungsform der Erfindung steht Y in der Formel (II) für einen Rest der Formel 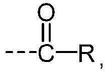 wobei R bevorzugt für Methyl steht und die aktivierten Methylengruppen der Formel (II) somit Acetoacetatgruppen sind.

Bevorzugt ist eine Verbindung V mit Acetoacetatgruppen ausgewählt aus der Liste bestehend aus Ethylacetoacetat, 1,2-Propandioldiacetoacetat, Dipropylenglykoldiacetoacetat, Tripropylenglykoldiacetoacetat, 1,3-Propandioldiacetoacetat, 1,4-Butandioldiacetoacetat, 2-Methyl-1,3-propandioldiacetoacetat, 1,5-Pentandioldiacetoacetat, Neopentylglykoldiacetoacetat, 1,6-Hexandioldiacetoacetat, Glycerin-diacetoacetat, Glycerin-triacetoacetat, 1,1,1-Trimethylolethan-diacetoacetat, 1,1,1-Trimethylolethan-triacetoacetat, 1,1,1-Trimethylolpropan-diacetoacetat, 1,1,1-Trimethylolpropan-triacetoacetat, dem Triacetoacetat von propoxyliertem und/oder ethoxyliertem 1,1,1-Trimethylolpropan, dem Triacetoacetat von propoxyliertem und/oder ethoxyliertem Glycerin, Poly(oxy-1,2-propylen)diol-bis(acetoacetat), Ethylenoxid-Einheiten enthaltendem Poly(oxy-1,2-propylen)diol-bis(acetoacetat), Rizinusöl-bis(acetoacetat), Rizinusöl-tris(acetoacetat), Dimerfettsäure-basiertem Polyesterdiol-bis(acetoacetat) und Trimerfettsäure-basiertem Polyestertrioltris(acetoacetat).

Davon bevorzugt ist 1,2-Propandioldiacetoacetat, Dipropylenglykoldiacetoacetat, Neopentylglykoldiacetoacetat, Glycerin-diacetoacetat, Glycerin-triacetoacetat, 1,1,1-Trimethylolpropan-diacetoacetat, 1,1,1-Trimethylolpropan-triacetoacetat, ein Triacetoacetat von propoxyliertem 1,1,1-Trimethylolpropan mit mittlerem Molekulargewicht Mₙ von 500 bis 1'000 g/mol oder ein Poly(oxy-1,2-propylen)diol-bis-(acetoacetat) mit mittlerem Molekulargewicht Mₙ von 550 bis 5'000 g/mol.

In weiteren Ausführungsform steht Y für einen Rest der Formel 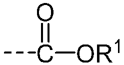 oder 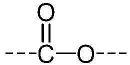 und die aktivierten Methylengruppen der Formel (II) sind somit Malonatgruppen.

Bevorzugt ist eine Verbindung **V** mit Malonatgruppen ausgewählt aus der Liste bestehend aus Malonsäurediethylester, Malonsäurediisopropylester, 1,2-Ethandiol-bis(ethylmalonat), 1,2-Propandiol-bis(ethylmalonat), 1,3-Propandiol-bis(ethylmalonat), 1,4-Butandiol-bis(ethylmalonat), 1,6-Hexandiol-bis(ethylmalonat), 1,4-Cyclohexandimethanol-bis(ethylmalonat), Diethylenglykol-bis(ethylmalonat), Dipropylenglykol-bis(ethylmalonat), Glycerin-tris(ethylmalonat), 1,1,1-Trimethylolpropan-tris(ethylmalonat), Rizinusöl-tris(ethylmalonat), Poly(oxy-1,2-propylen)diolbis(ethylmalonat) mit mittlerem Molekulargewicht Mₙ von 500 bis 2'000 g/mol, propoxyliertem 1,1,1-Trimethylolpropan mit drei Ethylmalonat-Endgruppen und einem mittleren Molekulargewicht Mₙ von 650 bis 2'500 g/mol, entsprechende oligomere Verbindungen dieser Umsetzungsprodukte, sowie Malonatgruppen enthaltende Polyesterdiole aus der Umsetzung von Diolen wie 1,6-Hexandiol und 1,4-Cyclohexandimethanol mit Malonsäure und Malonsäurediethylester und gegebenenfalls Adipinsäure oder Adipinsäurediethylester.

Geeignete Verbindungen mit Malonatgruppen sind auch kommerziell erhältlich, insbesondere als Acure^{®} 510-200 (von Allnex).

Die härtbare Zusammensetzung enthält bevorzugt mindestens einen Katalysator für die Reaktion zwischen den Methylengruppen der Formel (II) und den Aldimingruppen der Formel (I), insbesondere ein Stickstoff-haltiger Katalysator.

Bevorzugt als Stickstoff-haltigen Katalysator sind Verbindungen mit mindestens einer tertiären Aminogruppe, Amidingruppe oder Guanidingruppe.

Bevorzugt ist der Stickstoff-haltige Katalysator frei von primären und sekundären Aminogruppen, sowie von Hydroxylgruppen.

Geeignete Katalysatoren für die Reaktion zwischen den Methylengruppen der Formel (II) und den Aldimingruppen der Formel (I) sind insbesondere Triethylamin, Tripropylamin, Tributylamin, Tri(2-ethylhexyl)amin, N,N-Dimethylisopropylamin, N-Ethyldiisopropylamin, N,N-Dimethylcyclohexylamin, N,N-Dimethyl-C₁₂₋₁₄-alkylamin, N,N-Dimethylbenzylamin, α-Methylbenzyldimethylamin, Tetramethyl-1,2-ethandiamin, Tetramethyl-1,6-hexandiamin, Pentamethyldiethylentriamin, Tris(3-dimethylaminopropyl)amin, N-Methylpiperidin, N,N'-Dimethylpiperazin, N-Methyl-N'-dimethylaminoethylpiperazin, Bis-(dimethylaminoethyl)piperazin, 1,4-Diazabicyclo-[2.2.2]octan (DABCO), 1,3,5-Trimethylhexahydrotriazin, 1,3,5-Tris(dimethylaminopropyl)hexahydrotriazin, 1,3-Bis(dimethylaminopropyl)harnstoff, Bis(2-dimethylaminoethyl)ether, Tris(2-(2-methoxyethoxy)ethyl)amin, N-Methylmorpholin, N-Ethylmorpholin, 2,2'-Dimorpholinodiethylether (DMDEE), N-Methylimidazol, N-Vinylimidazol, 1,2-Dimethylimidazol, 1,8-Diazabicyclo[5.4.0]undec-7-en (DBU), 1,5-Diazabicyclo[4.3.0]non-5-en (DBN), Tetramethylguanidin (TMG) 1-Hexyl-2,3-diisopropylguanidin oder 1,1'-( α,ω-Polyoxypropylen)bis(2,3-diisopropylguanidin) mit mittlerem Molekulargewicht Mₙ von 250 bis 500 g/mol.

Im Fall von Methylengruppen der Formel (I), bei welchen Y für 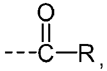 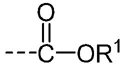 oder 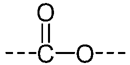 steht, ist ein Katalysator besonders bevorzugt.

In der härtbaren Zusammensetzung beträgt das Verhältnis der Anzahl Aldimingruppen zur Anzahl Isocyanatgruppen höchstens 1.

Bevorzugt ist ein Verhältnis der Anzahl Aldimingruppen zur Anzahl Isocyanatgruppen von 0.4 bis 1, bevorzugt 0.5 bis 0.95, insbesondere 0.6 bis 0.9. Eine solche Zusammensetzung zeigt eine geringe Neigung zu Blasenbildung bei der Aushärtung, und die ausgehärtete Zusammensetzung verfügt über eine hohe Festigkeit bei hoher Dehnbarkeit.

Die härtbare Zusammensetzung kann zusätzlich weitere Bestandteile enthalten, insbesondere:
- oligomere Diisocyanate, insbesondere bei Raumtemperatur flüssige Gemische aus MDI und MDI-Homologen (polymeres MDI bzw. PMDI), HDI-Biurete wie Desmodur^{®} N 100 oder N 3200 (von Covestro), Tolonate^{®} HDB oder HDB-LV (von Vencorex) oder Duranate^{®} 24A-100 (von Asahi Kasei), HDI-Isocyanurate wie Desmodur^{®} N 3300, N 3600 oder N 3790 BA (alle von Covestro), Tolonate^{®} HDT, HDT-LV oder HDT-LV2 (von Vencorex), Duranate^{®} TPA-100 oder THA-100 (von Asahi Kasei) oder Coronate^{®} HX (von Nippon Polyurethane), HDI-Uretdione wie Desmodur^{®} N 3400 (von Covestro), HDI-Iminooxadiazindione wie Desmodur^{®} XP 2410 (von Covestro), HDI-Allophanate wie Desmodur^{®} VP LS 2102 (von Covestro), IPDI-Isocyanurate wie beispielsweise in Lösung als Desmodur^{®} Z 4470 (von Covestro) oder in fester Form als Vestanat^{®} T1890/ 100 (von Evonik), TDI-Oligomere wie Desmodur^{®} IL (von Covestro), oder gemischte Isocyanurate auf Basis TDI/HDI wie Desmodur^{®} HL (von Covestro);
- Vernetzer, insbesondere Oxazolidine, Ketimine oder weitere Aldimine;
- Füllstoffe, insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, industriell hergestellte Russe, Graphit, Metall-Pulver beispielsweise von Aluminium, Kupfer, Eisen, Silber oder Stahl, PVC-Pulver oder Hohlkugeln;
- Pigmente, insbesondere Titandioxid, Chromoxid, Eisenoxide oder organische Pigmente;
- Farbstoffe;
- Fasern, insbesondere Glasfasern, Kohlefasern, Metallfasern, Keramikfasern, Hanffasern, Zellulosefasern oder Kunststofffasern wie Polyamidfasern oder Polyethylenfasern;
- Nanofüllstoffe oder Nanofasern wie Graphen oder Carbon Nanotubes;
- Weichmacher, insbesondere Phthalate insbesondere Diisononylphthalat (DINP), Diisodecylphthalat (DIDP) oder Di(2-propylheptyl)phthalat (DPHP), hydrierte Phthalate insbesondere Diisononyl-1,2-cyclohexandicarboxylat (DINCH), Terephthalate insbesondere Bis(2-ethylhexyl)terephthalat oder Diisononylterephthalat (DINT), hydrierte Terephthalate insbesondere Bis(2-ethylhexyl)-1,4-cyclohexandicarboxylat oder Diisononyl-1,4-cyclohexandicar-boxylat, Isophthalate, Trimellitate, Adipate insbesondere Dioctyladipat (DOA), Azelate, Sebacate, Citrate, Benzoate, Glycolether, Glycolester, Weichmacher mit Polyetherstruktur, insbesondere Poly(oxy-1,2-propylen)-monole, -diole oder -triole mit blockierten Hydroxylgruppen, insbesondere in der Form von Acetylgruppen, organische Sulfonate oder Phosphate insbesondere Diphenylkresylphosphat (DPK), Polybutene, Polyisobutene oder von natürlichen Fetten oder Ölen abgeleitete Weichmacher insbesondere epoxidiertes Soja- oder Leinöl oder Rapsölmethylester, wobei Phthalate, hydrierte Phthalate, Adipate oder Weichmacher mit Polyetherstruktur bevorzugt sind;
- Lösemittel;
- Modifizierungsmittel wie Kohlenwasserstoffharze, natürliche oder synthetische Wachse oder Bitumen;
- Rheologie-Modifizierer, insbesondere Harnstoffverbindungen, Schichtsilikate wie Bentonite, Derivate von Ricinusöl, hydriertes Ricinusöl, Polyamide, Polyurethane, pyrogene Kieselsäuren oder hydrophob modifizierte Polyoxyethylene;
- Trocknungsmittel, insbesondere Molekularsiebe, Calciumoxid, hochreaktive Isocyanate wie p-Tosylisocyanat, Mono-Oxazolidine wie Incozol^{®} 2 (von Incorez) oder Orthoester;
- Haftvermittler, insbesondere Titanate oder Organoalkoxysilane wie insbesondere Epoxysilane, insbesondere 3-Glycidoxypropyltrimethoxysilan oder 3-Glycidoxypropyltriethoxysilan, Aminosilane, Iminosilane, Mercaptosilane, Vinylsilane, (Meth)acrylosilane, Carbamatosilane, Alkylsilane, S-(Alkylcarbonyl)mercaptosilane oder oligomere Formen dieser Silane;
- weitere Katalysatoren, insbesondere Organozinn(IV)-Verbindungen insbesondere Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat oder Dioctylzinndiacetylacetonat, oder Komplexverbindungen von Bismut(III) oder Zirkonium(IV), insbesondere mit Liganden ausgewählt aus Alkoholaten, Carboxylaten, 1,3-Diketonaten, Oxinat, 1,3-Ketoesteraten und 1,3-Ketoamidaten, sowie organische Säuren welche die Hydrolyse von Aldiminen beschleunigen, insbesondere Carbonsäuren oder Sulfonsäuren, insbesondere eine aromatische Carbonsäure;
- nicht-reaktive thermoplastische Polymere, insbesondere Homo- oder Copolymere von ungesättigten Monomeren, insbesondere aus der Gruppe umfassend Ethylen, Propylen, Butylen, Isobutylen, Isopren, Styrol, Vinylacetat und Alkyl-(meth)acrylate, insbesondere Polyethylene (PE), Polypropylene (PP), Polyisobutylene, Ethylenvinylacetat-Copolymere (EVA) und ataktische Poly-α-Olefine (APAO);
- flammhemmende Substanzen, insbesondere die bereits genannten Füllstoffe Aluminiumhydroxid oder Magnesiumhydroxid, organische Phosphorsäureester, Ammoniumpolyphosphate, Melamin oder Derivate davon, Borverbindungen oder Antimonverbindungen;
- Additive, insbesondere Netzmittel, Verlaufmittel, Entschäumer, Entlüfter, Stabilisatoren gegen Oxidation, Wärme, Licht oder UV-Strahlung oder Biozide;
sowie weitere üblicherweise in härtbaren Zusammensetzungen eingesetzte Substanzen.

Es kann sinnvoll sein, gewisse Substanzen vor dem Einmischen in die Zusammensetzung chemisch oder physikalisch zu trocknen.

Bevorzugt enthält die härtbare Zusammensetzung mindestens einen weiteren Bestandteil ausgewählt aus Füllstoffen, Pigmenten, Weichmachern und Haftvermittlern. Bevorzugt enthält die härtbare Zusammensetzung mehrere solche Bestandteile.

Die härtbare Zusammensetzung enthält bezogen auf die gesamte Zusammensetzung bevorzugt weniger als 10 Gewichts-%, besonders bevorzugt weniger als 5 Gewichts-%, insbesondere weniger als 1 Gewichts-%, flüchtige organische Verbindungen (VOC) mit einem Siedepunkt bei Normaldruck von weniger als 250 °C. Eine solche Zusammensetzung verursacht besonders wenig Emissionen.

Eine bevorzugte härtbare Zusammensetzung enthält bezogen auf die gesamte Zusammensetzung
- 5 bis 90 Gewichts-%, bevorzugt 10 bis 70 Gewichts-%, Isocyanatgruppen-haltige Polymere,
- 0 bis 80 Gewichts-%, bevorzugt 20 bis 70 Gewichts-%, der Summe aus Füllstoffen, Pigmenten und Verdickern,
- 0 bis 60 Gewichts-%, insbesondere 10 bis 50 Gewichts-%, Weichmacher, sowie mindestens ein Aldimin **L** und mindestens eine Verbindung **V,** wie vorgängig beschrieben, sowie gegebenenfalls weitere Bestandteile.

Bevorzugt ist die härtbare Zusammensetzung als Mehrkomponentensystem, insbesondere als Zweikomponentensystem, formuliert.

Bevorzugt umfasst die härtbare Zusammensetzung eine Komponente **K1** und eine Komponente **K2,** welche jeweils für sich allein lagerstabil sind und in voneinander getrennten Gebinden gelagert werden, wobei Isocyanatgruppen-haltige Polymere und Aldimine L bevorzugt Bestandteil der Komponente **K1** und Verbindungen **V** und gegebenenfalls ein Katalysator für die Reaktion zwischen den Methylengruppen der Formel (II) und den Aldimingruppen der Formel (I) bevorzugt Bestandteil der Komponente **K2** sind. Zum Gebrauch der Zusammensetzung werden die beiden Komponenten **K1** und **K2** kurz vor oder während der Applikation miteinander vermischt, womit die Aushärtung beginnt.

Weitere Inhaltsstoffe der Zusammensetzung können als Bestandteil der Komponente **K1** und/oder **K2** vorhanden sein. Mit Isocyanatgruppen reaktive Substanzen sind bevorzugt ein Bestandteil der Komponente **K2**.

Besonders bevorzugt ist ein asymmetrisches Zweikomponentensystem mit einer mengenmässig dominierenden Komponente **K1** enthaltend das Isocyanatgruppen-haltige Polymer und das Aldimin **L**, welche mit Feuchtigkeit auch allein aushärtbar ist; und einer zweiten, sogenannten "Booster"-Komponente enthaltend die Verbindung **V** und gegebenenfalls einen Katalysator.

In einer besonders bevorzugten Ausführungsform enthält die Komponente **K1** somit das Isocyanatgruppen-haltige Polymer, das Aldimin **L** und zusätzlich mindestens eine Säure.

Als Säure geeignet ist insbesondere eine organische Säure, insbesondere eine Carbonsäure wie 2-Ethylhexansäure, Laurinsäure, Stearinsäure, Isostearinsäure, Ölsäure, Neodecansäure, Benzoesäure, Salicylsäure oder 2-Nitrobenzoesäure, ein organisches Carbonsäureanhydrid, eine organische Sulfonsäure wie Methansulfonsäure, p-Toluolsulfonsäure oder 4-Dodecylbenzolsulfonsäure, oder ein Sulfonsäureester, bevorzugt eine aromatische Carbonsäure wie Benzoesäure, 2-Nitrobenzoesäure oder Salicylsäure.

Eine solche Komponente **K1** kann auch allein mittels Zutritt von Feuchtigkeit durch Reaktion der hydrolysierenden Aldimingruppen mit Isocyanatgruppen und Reaktion von weiteren Isocyanatgruppen mit Feuchtigkeit aushärten, wobei die Säure die Hydrolyse der Aldmingruppen beschleunigt.

Die Komponente **K2** kann dabei nach Bedarf eingesetzt werden, um die Aushärtung der Komponente **K1** ohne durch Feuchtigkeit induzierte Hydrolyse zu ermöglichen und die Freisetzung des Aldehyds aus dem Aldimin **L** zu unterbinden. Eine solche Komponente **K2** kann auch als "Booster"-Komponente bezeichnet werden.

Für den Fall, dass die härtbare Zusammensetzung eine Säure und einen Stickstoff-haltigen Katalysator enthält, ist der Stickstoff-haltige Katalysator bevorzugt so dosiert, dass die Zusammensetzung nach dem Vermischen der Inhaltsstoffe oder Komponenten nicht sauer ist, d.h. die Säure durch den Stickstoff-haltigen Katalysator vollständig neutralisiert wird.

Die Komponente **K2** kann eine geringe Menge Wasser enthalten, insbesondere 0.05 bis 5 Gewichts-%, bevorzugt 0.1 bis 2 Gewichts-%, Wasser bezogen auf die gesamte Zusammensetzung.

Die Konsistenz der Komponenten ist vorzugsweise so, dass die Komponenten bei Umgebungsbedingungen mit einfachen Verfahren gut miteinander vermischt werden können. Dazu sind insbesondere flüssige oder pastöse Komponenten geeignet. Bevorzugt weisen die Komponenten eine ähnliche Viskosität und/oder Rheologie auf. Solche Komponente sind besonders einfach miteinander mischbar.

Die Komponenten **K1** und **K2** der härtbaren Zusammensetzung werden getrennt voneinander hergestellt. Dabei werden die Inhaltsstoffe der jeweiligen Komponente miteinander vermischt, so dass eine makroskopisch homogene Flüssigkeit oder Paste entsteht. Die Komponenten **K1** und **K2** werden jeweils in einem separaten Gebinde gelagert. Geeignete Gebinde sind insbesondere Fässer, Container, Hobbocks, Eimer, Kanister, Dosen, Beutel, Schlauchbeutel, Kartuschen oder Tuben.

Zur Anwendung der härtbaren Zusammensetzung werden alle Inhaltsstoffe, insbesondere als Komponenten **K1** und **K2**, kurz vor oder während der Applikation miteinander vermischt, wobei das Mischungsverhältnis so gewählt wird, dass das Verhältnis der Anzahl Aldimingruppen zur Anzahl Isocyanatgruppen und das Verhältnis der Anzahl aktivierte Methylengruppen der Formel (II) zur Anzahl Aldimingruppen im erfindungsgemässen Bereich liegen. In Gewichtsteilen liegt das Mischungsverhältnis bevorzugt bei 50:1 bis 1:1, insbesondere 25:1 bis 2:1.

Das Mischen erfolgt bevorzugt bei Umgebungstemperatur, insbesondere bei einer Temperatur von -5 bis 50 °C, bevorzugt 0 bis 40 °C, insbesondere 5 bis 35 °C.

Werden die Komponenten vor der Applikation miteinander vermischt, so muss darauf geachtet werden, dass zwischen dem Vermischen der Komponenten und der Applikation nicht zu viel Zeit vergeht, da es sonst durch die einsetzende Reaktion und den damit verbundenen Anstieg der Viskosität zu Störungen wie beispielsweise einem ungenügenden Verlauf oder einer verlangsamten oder unvollständigen Haftungsaufbau zum Substrat kommen kann. Insbesondere soll die Offenzeit der Zusammensetzung während der Applikation nicht überschritten werden.

Als "Offenzeit" wird dabei die Zeitspanne zwischen dem Vermischen der Komponenten und dem Ende eines für die Verarbeitung geeigneten Zustands der Zusammensetzung bezeichnet. Die Offenzeit kann auch als "Verarbeitungszeit" bezeichnet werden. Die Zeit bis zur Ausbildung einer klebfreien Oberfläche ("tack-free time") stellt dabei ein Mass für die Offenzeit dar.

Mit dem Vermischen der Inhaltsstoffe oder Komponenten beginnt die Zusammensetzung durch die einsetzende chemische Reaktion auszuhärten.

Aufgrund der beobachteten Effekte kann vermutet werden, dass die aktivierten Methylengruppen der Formel (II) mit Aldimingruppen der Formel (I) reagieren und diese dadurch aktiviert, d.h. gegenüber Isocyanatgruppen reaktionsfähig, werden. Die Reaktion der aktivierten Aldimingruppen mit den Isocyanatgruppen führt zur Vernetzung des Isocyanatgruppen-haltigen Polymers unter Bildung von Harnstoffgruppen. Anders als bei der hydrolytischen Aktivierung von Aldimingruppen wird der Aldehyd dabei nicht freigesetzt, sondern verbleibt in derivatisierter Form, vermutlich als Addukt mit der Verbindung **V** oder Folgeprodukten davon, dauerhaft in der Zusammensetzung. Weiterhin können Isocyanatgruppen mit vorhandener Feuchtigkeit oder mit Methylengruppen der Formel (II) reagieren.

Die Aushärtung erfolgt bevorzugt bei Umgebungstemperatur, insbesondere bei einer Temperatur von -5 bis 50 °C, bevorzugt 0 bis 40 °C.

Die Aushärtungsreaktion verläuft zuverlässig ohne Blasenbildung und ohne Geruchsbildung. Die in der Zusammensetzung verbleibenden Aldehyd-Derivate zeigen weder Anzeichen von Migration, noch scheinen sie weichmachend auf die ausgehärtete Zusammensetzung zu wirken.

Ein weiterer Gegenstand der Erfindung ist die ausgehärtete Zusammensetzung, erhalten aus der härtbaren Zusammensetzung nach dem Vermischen der Inhaltsstoffe oder Komponenten und anschliessendem Aushärten.

Bevorzugt ist die ausgehärtete Zusammensetzung elastisch und weist eine hohe Dehnbarkeit auf.

Bevorzugt weist die ausgehärtete Zusammensetzung eine Bruchdehnung von mindestens 50 %, bevorzugt 100 %, insbesondere mindestens 200 %, auf, bestimmt gemäss DIN EN 53504 an hantelförmigen Prüfkörpern (Länge 75 mm, Steglänge 30 mm, Stegbreite 4 mm, Dicke 2 mm) mit einer Zuggeschwindigkeit von 200 mm/min.

Die härtbare Zusammensetzung eignet sich für eine Vielzahl von Verwendungen. Sie kann insbesondere verwendet werden als Klebstoff, Dichtstoff, Beschichtung, Giessharz oder Spachtelmasse.

Bevorzugt ist die Verwendung als elastischer Klebstoff oder elastischer Dichtstoff, wobei die Inhaltsstoffe oder Komponenten miteinander vermischt werden und die vermischte Zusammensetzung im flüssigen Zustand auf mindestens ein Substrat appliziert wird.

Geeignete Substrate sind insbesondere:
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- faserverstärkte Kunststoffe, wie Kohlefaser-verstärkte Kunststoffe (CFK), Glasfaser-verstärkte Kunststoffe (GFK), Naturfaser-verstärkte Kunststoffe (NFK) und Sheet Moulding Compounds (SMC);
- Isoliermaterialen, insbesondere Schäume, insbesondere aus EPS, XPS, PUR, PIR, Aerogel oder geschäumtes Glas (Foamglas), oder Fasern aus Steinwolle oder Glaswolle,
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke.

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Aus der Verwendung der härtbaren Zusammensetzung wird ein Artikel erhalten. Der Artikel ist insbesondere mit der Zusammensetzung verklebt oder abgedichtet. Dieser Artikel kann ein Bauwerk oder ein Teil davon sein, insbesondere ein Bauwerk des Hoch- oder Tiefbaus, eine Brücke, ein Dach, ein Treppenhaus oder eine Fassade, oder er kann ein industrielles Gut oder ein Konsumgut sein, insbesondere ein Fenster, ein Rohr, ein Rotorblatt einer Windkraftanlage, eine Haushaltmaschine oder ein Verkehrsmittel wie insbesondere ein Automobil, ein Bus, ein Lastkraftwagen, ein Schienenfahrzeug, ein Schiff, ein Flugzeug oder ein Helikopter, oder ein Anbauteil davon.

Ein weiterer Gegenstand der Erfindung ist die Verwendung einer Booster-Komponente enthaltend mindestens eine Verbindung **V** mit aktivierten Methylengruppen der Formel (II) zum Aushärten einer einkomponentigen Zusammensetzung enthaltend mindestens ein Isocyanatgruppen-haltiges Polymer und mindestens ein Aldimin L mit Aldimingruppen der Formel (I), wobei die Booster-Komponente mit einer geeigneten Methode mit der einkomponentigen Zusammensetzung vermischt wird.

Bevorzugt beträgt in der einkomponentigen Zusammensetzung das Verhältnis der Anzahl Aldimingruppen der Formel (I) zur Anzahl Isocyanatgruppen höchstens 1.

Bevorzugt wird die Booster-Komponente in einer solchen Menge eingesetzt, dass das Verhältnis der Anzahl aktivierte Methylengruppen der Formel (II) zur Anzahl Aldimingruppen mindestens 1 beträgt.

Bevorzugt enthält die Booster-Komponente mindestens einen Stickstoff-haltigen Katalysator, insbesondere eine Verbindung mit mindestens einer tertiären Aminogruppe, Amidingruppe oder Guanidingruppe, welche frei von primären und sekundären Aminogruppen und Hydroxylgruppen ist, insbesondere in einer solchen Menge, dass gegebenenfalls in der einkomponentigen Zusammensetzung enthaltene Säuren beim Vermischen mit der Booster-Komponente vollständig neutralisiert werden.

Die Booster-Komponente kann zusätzlich weitere Inhaltsstoffe enthalten, insbesondere Weichmacher, Füllstoffe oder Pigmente.

Durch den Einsatz der Booster-Komponente härtet die einkomponentige Zusammensetzung auch ohne Zutritt von Feuchtigkeit aus der Umgebung aus, wobei unerwünschte Auswirkungen des dem Aldimin **L** zugrunde liegenden Aldehyds wie Geruch, weichmachende Wirkung oder Migrationseffekte nicht auftreten.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Merck.

Die **Viskosität** wurde auf einem thermostatisierten Kegel-Platte-Viskosimeter Rheotec RC30 (Kegeldurchmesser 10 mm, Kegelwinkel 1°, Kegelspitze-Platte-Abstand 0.05 mm, Scherrate 10 s⁻¹) gemessen. Für Viskositäten von weniger als 0.5 Pa s wurde mit Kegeldurchmesser 50 mm gemessen.

### Herstellung von Isocyanatgruppen-haltigen Polymeren:

### Polymer P1:

590 g Polyoxypropylendiol (Acclaim^{®} 4200, OH-Zahl 28 mg KOH/g, von Covestro), 1180 g Ethylenoxid-terminiertes Polyoxypropylentriol (Caradol^{®} MD34-02, OH-Zahl 35 mg KOH/g, von Shell) und 230 g Isophorondiisocyanat (Vestanat^{®} IPDI, von Evonik) wurden bei 80 °C nach bekanntem Verfahren zu einem Polymer mit einem NCO-Gehalt von 2.1 Gewichts-% umgesetzt.

### Polymer P2:

725 g Ethylenoxid-terminiertes Polyoxypropylentriol (Desmophen^{®} 5031 BT, OH-Zahl 28.0 mg KOH/g, OH-Funktionalität ca. 2.3, von Covestro) und 275 g 4,4'-Diphenylmethandiisocyanat (Desmodur^{®} 44 MC L, von Covestro) wurden bei 80 °C nach bekanntem Verfahren zu einer Reaktionsmischung mit einem NCO-Gehalt von 7.6 Gewichts-% umgesetzt. Anschliessend wurden die flüchtigen Bestandteile, insbesondere nicht umgesetztes 4,4'-Diphenylmethandiisocyanat, in einem Kurzwegverdampfer destillativ entfernt, wobei ein Polymer mit einem NCO-Gehalt von 1.68 Gewichts-% und einen Gehalt an monomerem 4,4'-Diphenylmethandiisocyanat von 0.04 Gewichts-% erhalten wurde.

### Polymer P3:

513.3 g Polyoxypropylendiol (Acclaim^{®} 4200, OH-Zahl 28 mg KOH/g, von Covestro), 256.7 g Ethylenoxid-terminiertes Polyoxypropylentriol (Caradol^{®} MD34-02, OH-Zahl 35 mg KOH/g, von Shell) und 64.2 g Toluendiisocyanat (Desmodur^{®} T 80 P, von Covestro) wurden bei 80 °C nach bekanntem Verfahren zu einem Polymer mit einem NCO-Gehalt von 1.5 Gewichts-% umgesetzt.

### Polymer P4:

1'300 g Polyoxypropylendiol (Acclaim^{®} 4200, OH-Zahl 28 mg KOH/g, von Covestro), 2'600 g Ethylenoxid-terminiertes Polyoxypropylentriol (Caradol^{®} MD34-02, OH-Zahl 35 mg KOH/g, von Shell) und 600 g 4,4'-Diphenylmethandiisocyanat (Desmodur^{®} 44 MC L, von Covestro) wurden in Gegenwart von 500 g Diisodecylphthalat bei 80 °C nach bekanntem Verfahren zu einem Polymer mit einem NCO-Gehalt bezogen auf das Gesamtgewicht aus Polymer und Diisodecylphthalat von 2.1 Gewichts-% umgesetzt.

### Herstellung von Aldiminen:

### Aldimin A1:

212.2 g (2 mol) Benzaldehyd wurde unter Stickstoffatmosphäre vorgelegt, unter gutem Rühren mit 158.3 g (1 mol) 2,2(4),4-Trimethyl-1,6-hexandiamin (Vestamin^{®} TMD, von Evonik) versetzt und anschliessend die flüchtigen Bestandteile bei 80 °C und 10 mbar Vakuum entfernt. Erhalten wurden 333.6 g N,N'-Dibenzyliden-2,2(4),4-Trimethyl-1,6-hexandiamin als klare, gelbliche Flüssigkeit mit einer Aminzahl von 335 mg KOH/g und einem Aldimin-Equivalentgewicht von 167.3 g/eq.

### Aldimin A2:

106.1 g (1 mol) Benzaldehyd wurde unter Stickstoffatmosphäre vorgelegt, unter gutem Rühren mit 124.0 g (1 mol NH₂) Polyoxypropyendiamin (Jeffamine^{®} D-230, von Huntsman) versetzt und anschliessend die flüchtigen Bestandteile bei 80 °C und 10 mbar Vakuum entfernt. Erhalten wurden 210.7 g einer klaren, gelblichen Flüssigkeit mit einer Viskosität bei 20 °C von 0.34 Pa·s, einer Aminzahl von 265 mg KOH/g und einem Aldimin-Equivalentgewicht von 212 g/eq.

### Aldimin A3:

50.00 g **Aldehyd-1** (0.17 mol Aldehydgruppen) wurden in einem Rundkolben unter Stickstoffatmosphäre vorgelegt, unter gutem Rühren mit 13.93 g (0.08 mol) Isophorondiamin (Vestamin^{®} IPD, von Evonik) versetzt und anschliessend die flüchtigen Bestandteile bei 80 °C und 10 mbar Vakuum entfernt. Erhalten wurde eine klare, gelbliche Flüssigkeit mit einem Aldimin-Equivalentgewicht von 390 g/eq.

Als **Aldehyd-1** wurde ein Reaktionsgemisch enthaltend mehrheitlich verzweigte 4-(C₁₀₋₁₄-Alkyl)benzaldehyde mit einem mittleren Aldehyd-Equivalentgewicht von 290 g/eq eingesetzt, erhalten aus mittels HF-BF₃ katalysierter Formylierung von C₁₀₋₁₄-Alkylbenzol.

### Herstellung von Verbindungen mit aktivierten Methylengruppen:

### Verbindung V-1: (mit Cyanoacetatgruppen)

555.2 g (5.4 mol OH) propoxyliertes 1,1,1-Trimethylolpropan (Desmophen^{®} 4011 T, OH-Zahl 550 mg KOH/g, von Covestro) wurden mit 633.5 g (5.6 mol) Ethylcyanoacetat und 1.2 g Tetra-n-butyltitanat (Tyzor^{®} TnBT, von Dorf Ketal) versetzt und bei einer Temperatur von 80 bis 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 866.2 g einer klaren, gelblichen Flüssigkeit mit einer Viskosität von 1.72 Pa s bei 20 °C, einer Cyanoacetat-Funktionalität von 3 und einem Cyanoacetat-Equivalentgewicht von 169 g/eq.

### Verbindung V-2: (mit Acetoacetatgruppen)

154.2 g (1.5 mol OH) propoxyliertes 1,1,1-Trimethylolpropan (Desmophen^{®} 4011 T, OH-Zahl 550 mg KOH/g, von Covestro) wurden mit 201.7 g (1.55 mol) Ethylacetoacetat und 0.4 g Tetra-n-butyltitanat (Tyzor^{®} TnBT, von Dorf Ketal) versetzt und bei einer Temperatur von 80 bis 140 °C unter Vakuum umgesetzt, bis im FT-IR die breite OH-Bande im Bereich von 3'300 bis 3'600 cm-' verschwunden war und keine flüchtigen Stoffe mehr abgeschieden wurden. Erhalten wurden 265.1 g einer klaren, gelblichen Flüssigkeit mit einer Viskosität von 0.8 Pa s bei 20 °C, einer Acetoacetat-Funktionalität von 3 und einem Acetoacetat-Equivalentgewicht von 186 g/eq.

### verwendete weitere Substanzen und Abkürzungen:

| | |
|---|---|
| TEA | Triethylamin |
| DMDEE | 2,2'-Dimorpholinodiethylether |
| DBU | 1,8-Diazabicyclo[5.4.0]undec-7-en (Lupragen^{®} N700, von BASF) |
| DAEE | Bis(2-dimethylaminoethyl)ether |
| Guanidin-1 | 1,1'-(α,ω-Polyoxypropylen)bis(2,3-diisopropylguanidin), hergestellt wie nachfolgend beschrieben |
| TMG | Tetramethylguanidin |
| DIDP | Diisodecylphthalat (Palatinol^{®} 10-P, von BASF) |
| DBTDL | Dibutylzinndilaurat |
| DBTDL 5% | 5 Gew.% Dibutylzinndilaurat in Diisodecylphthalat |
| Salicylsäure 5% | 5 Gew.% Salicylsäure in Dioctyladipat |
| calciniertes Kaolin | Satintone^{®} Whitetex, von H.M. Royal |
| Titandioxid | Kronos^{®} 2500, von Kronos |
| pyrog. Kieselsäure | pyrogene Kieselsäure (Aerosil^{®} R 972, von Evonik) |
| Verdickerpaste | Harnstoffaddukt in Diisodecylphthalat, hergestellt wie nachfolgend beschrieben |

Das **Guanidin-1** wurde hergestellt durch Umsetzung von 5.57 g Polyoxypropylendiamin mit mittlerem Molekukargewicht Mₙ ca. 430 g/mol (Jeffamine^{®} D-400, von Huntsman) und 2.95 g N,N'-Diisopropylcarbodiimid während 18 h bei 120 °C und anschliessendem Entfernen der flüchtigen Bestandteile im Vakuum. Erhalten wurde eine geruchlose gelbliche Flüssigkeit.

Die **Verdickerpaste** wurde hergestellt, indem in einem Vakuummischer 300 g Diisodecylphthalat und 48 g 4,4'-Diphenylmethandiisocyanat (Desmodur^{®} 44 MC L, von Covestro) vorgelegt, leicht aufgewärmt und anschliessend unter starkem Rühren langsam mit 27 g n-Butylamin versetzt und unter Vakuum und Kühlung eine Stunde weitergerührt wurden. Erhalten wurde eine homogene, feinteilige, streichfähige Paste.

### Herstellung von härtbaren Zusammensetzungen,

### Beispiele Z-1 bis Z-30:

Für jedes Beispiel wurden die in den Tabellen 1 bis 6 angegebenen Inhaltsstoffe der ersten Komponente (**K1**) in den angegebenen Mengen (in Gewichtsteilen) mittels eines Zentrifugalmischers (Thinky ARE-250) miteinander vermischt, zu einer makroskopisch homogenen Flüssigkeit verarbeitet und die vermischte Komponente in einem feuchtigkeitsdichten Gebinde aufbewahrt.

Ebenso wurden die den Tabellen 1 bis 7 angegebenen Inhaltsstoffe der zweiten Komponente (**K2**) verarbeitet und aufbewahrt.

Anschliessend wurden die Komponenten jeder Zusammensetzung mittels des Zentrifugalmischers zu einer homogenen Flüssigkeit oder Paste verarbeitet und wie folgt beschrieben geprüft.

Die Zeit bis zur Klebefreiheit (**Tack Free Time** oder abgekürzt **TFT**) wurde bestimmt, indem 20 g der vermischten Zusammensetzung in einer Schichtdicke von ca. 2 mm auf Pappkarton aufgetragen und im Normklima die Zeitdauer bestimmt wurde, bis beim leichten Antippen der Oberfläche der applizierten Zusammensetzung mittels einer Pipette aus LDPE erstmals keine Rückstände auf der Pipette mehr zurückblieben.

Zur Bestimmung der mechanischen Eigenschaften wurde die vermischte Zusammensetzung auf einem silikonbeschichteten Trennpapier zu einem Film von 2 mm Dicke aufgebracht, dieser während 7 Tagen im Normklima aushärten lassen, einige hantelförmige Prüfkörper mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit, Bruchdehnung, E-Modul 5%** (zwischen 0.5-5% Dehnung) und **E-Modul 50%** (zwischen 0.5-50% Dehnung) geprüft.

Die **Shore A** Härte wurde nach DIN 53505 an während 7 Tagen im Normklima gehärteten Prüfkörpern (Durchmesser 20 mm, Dicke 5 mm) bestimmt.

Der **Geruch** wurde durch Riechen mit der Nase im Abstand von 2 cm an den frisch hergestellten Filmen beurteilt. "0" bedeutet, dass kein Aldehyd-Geruch wahrnehmbar war. "+", "++" oder"+++" bedeuten, dass ein leichter, deutlicher oder intensiver Aldehyd-Geruch wahrnehmbar war.

Zur Kontrolle der **Aushärtung ohne Luftfeuchtigkeit** wurde bei einigen Zusammensetzungen die frisch vermischte Zusammensetzung unter Luftausschluss in einer Aluminiumtube gelagert und nach 1 d (24 h) geprüft, ob die Masse noch flüssig oder ausgehärtet (fest) war. Falls die Masse noch flüssig war, wurde die Tube verschlossen und nach insgesamt 7d Lagerzeit erneut beurteilt.

Bei der Aushärtung entstand jeweils ein blasenfreies, nicht-klebriges, polymeres Material.

Die Resultate sind in den Tabellen 1 bis 6 angegeben.

Die mit "**(Ref.)**" bezeichneten Beispiele sind Vergleichsbeispiele.

**Tabelle 1: Zusammensetzung und Eigenschaften von Z-1 bis Z-6.**

| **Beispiel** | | **Z-1 (Ref.)** | **Z-2** | **Z-3** | **Z-4** | **Z-5** | **Z-6** |
|---|---|---|---|---|---|---|---|
| **Komponente K1:** | | | | | | | |
| Polymer **P1** | | 80.00 | 80.00 | 80.00 | 80.00 | 80.00 | 80.00 |
| Aldimin **A1** | | 4.68 | 4.68 | 4.68 | 4.68 | 4.68 | 4.68 |
| DBTDL 5% | | 0.50 | 0.50 | 0.50 | 0.50 | 0.50 | 0.50 |
| Salicylsäure 5% | | 1.50 | 1.50 | 1.50 | - | - | - |

| **Komponente K2:** | | | | | | | |
|---|---|---|---|---|---|---|---|
| Verbindung **V-1** | | - | 9.46 | 9.46 | 9.46 | 9.46 | 9.46 |
| TEA | | - | - | 1.0 | 1.0 | - | |
| DAEE | | - | - | - | - | 0.2 | |
| DBU | | - | - | - | - | - | 0.2 |
| Verhältnis (I) / NCO ¹ | | 0.7 | 0.7 | 0.7 | 0.7 | 0.7 | 0.7 |
| Verhältnis (II) / (I) ² | | - | 2.0 | 2.0 | 2.0 | 2.0 | 2.0 |
| TFT [min] | | 120 | 40 | 50 | 60 | 80 | 66 |
| Zugfestigkeit [MPa] | | 1.06 | 1.07 | 1.14 | 1.34 | 1.22 | 1.00 |
| Bruchdehnung [%] | | 205 | 350 | 330 | 390 | 270 | 280 |
| E-Modul 5% [MPa] | | 1.13 | 0.68 | 0.70 | 0.69 | 0.97 | 0.77 |
| E-Modul 50% [MPa] | | 0.76 | 0.45 | 0.45 | 0.44 | 0.65 | 0.51 |
| Shore A | | 35 | 23 | 26 | 26 | 34 | 28 |
| Geruch | | +++ | 0 | 0 | 0 | 0 | 0 |
| Aushärtung ohne Luftfeuchtigkeit: | | | | | | | |
| | 1d | flüssig ³ | fest | fest | fest | fest | fest |
| | 7d | flüssig ⁴ | | | | | |

| | | | | | | | |
|---|---|---|---|---|---|---|---|
| ¹ Verhältnis der Anzahl Aldimingruppen der Formel (I) zur Anzahl Isocyanatgruppen ² Verhältnis der Anzahl aktivierte Methylengruppen der Formel (II) zur Anzahl Aldimingruppen der Formel (I) ³ Viskosität (20°C) 15.7 Pa.s ⁴ Viskosität (20°C) 16.5 Pa.s | | | | | | | |

**Tabelle 2: Zusammensetzung und Eigenschaften von Z-7 bis Z-12.**

| **Beispiel** | | **Z-7** | **Z-8** | **Z-9** | **Z-10** | **Z-11** | **Z-12** |
|---|---|---|---|---|---|---|---|
| **Komponente K1:** | | | | | | | |
| Polymer **P1** | | 80.00 | 80.00 | 80.00 | 80.00 | 80.00 | 80.00 |
| Aldimin **A1** | | 4.68 | 4.68 | 4.68 | 4.68 | 4.68 | 4.68 |
| DBTDL 5% | | 0.50 | 0.50 | 0.50 | 0.50 | 0.50 | 0.50 |
| Salicylsäure 5% | | 1.50 | - | - | - | - | - |

| **Komponente K2:** | | | | | | | |
|---|---|---|---|---|---|---|---|
| Verbindung **V-2** | | 10.41 | 10.41 | 10.41 | 10.41 | - | - |
| Ethylcyanoacetat | | - | - | - | - | 6.33 | 6.33 |
| TEA | | 1.0 | 1.0 | - | - | 1.0 | - |
| DMDEE | | - | - | 1.0 | - | - | - |
| DBU | | - | - | - | 1.0 | - | - |
| DAEE | | - | - | - | - | - | 1.0 |
| Verhältnis (I) / NCO ¹ | | 0.7 | 0.7 | 0.7 | 0.7 | 0.7 | 0.7 |
| Verhältnis (II) / (I) ² | | 2.0 | 2.0 | 2.0 | 2.0 | 2.0 | 2.0 |
| TFT [min] | | 60 | 65 | 75 | 4 | 55 | 40 |
| Zugfestigkeit [MPa] | | 1.06 | 1.30 | 0.91 | 1.73 | 0.96 | 1.05 |
| Bruchdehnung [%] | | 255 | 320 | 253 | 235 | 219 | 229 |
| E-Modul 5% [MPa] | | 0.87 | 0.92 | 0.72 | 0.89 | 0.92 | 0.97 |
| E-Modul 50% [MPa] | | 0.59 | 0.61 | 0.50 | 0.63 | 0.63 | 0.67 |
| Shore A | | 29 | 30 | 29 | 33 | 33 | 34 |
| Geruch | | 0 | 0 | 0 | 0 | 0 | 0 |
| Aushärtung ohne Luftfeuchtigkeit: | 1d | fest | fest | fest | fest | fest | fest |

| | | | | | | | |
|---|---|---|---|---|---|---|---|
| ¹ Verhältnis der Anzahl Aldimingruppen der Formel (I) zur Anzahl Isocyanatgruppen ² Verhältnis der Anzahl aktivierte Methylengruppen der Formel (II) zur Anzahl Aldimingruppen der Formel (I) | | | | | | | |

**Tabelle 3: Zusammensetzung und Eigenschaften von Z-13 bis Z-16.**

| **Beispiel** | | **Z-13 (Ref.)** | **Z-14** | **Z-15 (Ref.)** | **Z-16** |
|---|---|---|---|---|---|
| **Komponente K1:** | | | | | |
| Polymer **P1** | | 80.00 | 80.00 | 80.00 | 80.00 |
| Aldimin **A2** | | 5.81 | 5.81 | - | - |
| Aldimin **A3** | | - | - | 10.7 | 10.7 |
| DBTDL 5% | | 0.50 | 0.50 | 0.50 | 0.50 |
| Salicylsäure 5% | | 1.50 | - | 1.50 | - |

| **Komponente K2:** | | | | | |
|---|---|---|---|---|---|
| Verbindung **V-2** | | - | 10.19 | - | 10.19 |
| DMDEE | | - | 1.0 | - | 1.0 |
| Verhältnis (I) / NCO ¹ | | 0.7 | 0.7 | 0.7 | 0.7 |
| Verhältnis (II) / (I) ² | | - | 2.0 | - | 2.0 |
| TFT [min] | | 110 | 109 | 195 | 105 |
| Zugfestigkeit [MPa] | | 0.86 | 0.69 | 1.31 | 1.33 |
| Bruchdehnung [%] | | 185 | 190 | 197 | 249 |
| E-Modul 5% [MPa] | | 0.93 | 0.65 | 1.41 | 1.08 |
| E-Modul 50% [MPa] | | 0.65 | 0.48 | 0.92 | 0.73 |
| Shore A | | 31 | 26 | 40 | 34 |
| Geruch | | +++ | 0 | 0 | 0 |
| Aushärtung ohne Luftfeuchtigkeit: | | | | | |
| | 1d | flüssig | fest | flüssig ³ | fest |
| | 7d | flüssig | | flüssig ⁴ | |

| | | | | | |
|---|---|---|---|---|---|
| ¹ Verhältnis der Anzahl Aldimingruppen der Formel (I) zur Anzahl Isocyanatgruppen ² Verhältnis der Anzahl aktivierte Methylengruppen der Formel (II) zur Anzahl Aldimingruppen der Formel (I) ³ Viskosität (20°C) 13.8 Pa.s ⁴ Viskosität (20°C) 15.4 Pa.s | | | | | |

**Tabelle 4: Zusammensetzung und Eigenschaften von Z-17 bis Z-21.**

| **Beispiel** | | **Z-17 (Ref.)** | **Z-18** | **Z-19** | **Z-20** | **Z-21** |
|---|---|---|---|---|---|---|
| **Komponente K1:** | | | | | | |
| Polymer **P2** | | 80.0 | 80.0 | 80.0 | 80.0 | 80.0 |
| Aldimin **A1** | | 3.27 | 3.27 | 3.27 | 3.27 | 3.27 |
| Salicylsäure 5% | | 1.5 | 1.5 | 1.5 | - | - |

| **Komponente K2:** | | | | | | |
|---|---|---|---|---|---|---|
| Verbindung **V-2** | | - | 8.00 | 8.00 | 8.00 | 8.00 |
| DMDEE | | - | - | 1.0 | - | - |
| Guanidin-1 | | - | - | - | 0.2 | - |
| TMG | | - | - | - | - | 1.0 |
| Verhältnis (I) / NCO ¹ | | 0.6 | 0.6 | 0.6 | 0.6 | 0.6 |
| Verhältnis (II) / (I) ² | | - | 2.2 | 2.2 | 2.2 | 2.2 |
| TFT [min] | | 25 | 15 | 17 | 16 | 4 |
| Zugfestigkeit [MPa] | | 0.79 | 0.72 | 0.74 | 1.08 | 0.78 |
| Bruchdehnung [%] | | 116 | 126 | 154 | 200 | 145 |
| E-Modul 5% [MPa] | | 1.16 | 0.94 | 0.83 | 1.07 | 0.86 |
| E-Modul 50% [MPa] | | 0.81 | 0.68 | 0.60 | 0.74 | 0.57 |
| Shore A | | 38 | 35 | 32 | 35 | 29 |
| Geruch | | +++ | ++ | 0 | 0 | 0 |
| Aushärtung ohne Luftfeuchtigkeit: | | | | | | |
| | 1d | flüssig ³ | fest | fest | fest | fest |
| | 7d | flüssig ⁴ | | | | |

| | | | | | | |
|---|---|---|---|---|---|---|
| ¹ Verhältnis der Anzahl Aldimingruppen der Formel (I) zur Anzahl Isocyanatgruppen ² Verhältnis der Anzahl aktivierte Methylengruppen der Formel (II) zur Anzahl Aldimingruppen der Formel (I) ³ Viskosität (20°C) 47.9 Pa.s ⁴ Viskosität (20°C) 54.1 Pa.s | | | | | | |

**Tabelle 5: Zusammensetzung und Eigenschaften von Z-22 bis Z-27.**

| **Beispiel** | | **Z-22 (Ref.)** | **Z-23** | **Z-24** | **Z-25 (Ref.)** | **Z-26** | **Z-27** |
|---|---|---|---|---|---|---|---|
| **Komponente K1:** | | | | | | | |
| Polymer **P2** | | 80.0 | 80.0 | 80.0 | 80.0 | 80.0 | - |
| Polymer **P3** | | - | - | - | - | - | 80.0 |
| Aldimin **A1** | | - | - | - | - | - | 3.41 |
| Aldimin **A2** | | 4.06 | 4.06 | 4.06 | - | - | - |
| Aldimin **A3** | | - | - | - | 9.4 | 9.4 | - |
| DBTDL 5% | | - | - | - | - | - | 0.5 |
| Salicylsäure 5% | | 1.5 | 1.5 | - | 1.5 | 1.5 | - |

| **Komponente K2:** | | | | | | | |
|---|---|---|---|---|---|---|---|
| Verbindung **V-2** | | - | 7.9 | 7.9 | - | 9.8 | 7.9 |
| TEA | | - | - | 1.0 | - | - | - |
| DMDEE | | - | - | - | - | 1.0 | 1.0 |
| Verhältnis (I) / NCO ¹ | | 0.6 | 0.6 | 0.6 | 0.6 | 0.6 | 0.7 |
| Verhältnis (II) / (I) ² | | - | 2.2 | 2.2 | - | 2.2 | 2.1 |
| TFT [min] | | 19 | 15 | 10 | 35 | 6 | 46 |
| Zugfestigkeit [MPa] | | 0.79 | 0.76 | 0.80 | 0.73 | 0.72 | 0.51 |
| Bruchdehnung [%] | | 120 | 195 | 75 | 125 | 192 | 385 |
| E-Modul 5% [MPa] | | 1.14 | 0.71 | 1.5 | 1.04 | 0.71 | 0.17 |
| E-Modul 50% [MPa] | | 0.80 | 0.51 | 1.1 | 0.71 | 0.48 | 0.14 |
| Shore A | | 37 | 29 | 43 | 36 | 27 | 10 |
| Geruch | | +++ | ++ | 0 | 0 | 0 | 0 |
| Aushärtung ohne Luftfeuchtigkeit: | | | | | | | |
| | 1d | flüssig ³ | fest | fest | flüssig ⁵ | fest | fest |
| | 7d | flüssig ⁴ | | | flüssig ⁶ | | |

| | | | | | | | |
|---|---|---|---|---|---|---|---|
| ¹ Verhältnis der Anzahl Aldimingruppen der Formel (I) zur Anzahl Isocyanatgruppen ² Verhältnis der Anzahl aktivierte Methylengruppen der Formel (II) zur Anzahl Aldimingruppen der Formel (I) ³ Viskosität (20°C) 41.8 Pa.s ⁴ Viskosität (20°C) 42.9 Pa.s ⁵ Viskosität (20°C) 25.4 Pa.s ⁶ Viskosität (20°C) 26.8 Pa.s | | | | | | | |

**Tabelle 6: Zusammensetzung und Eigenschaften von Z-28 bis Z-30.**

| **Beispiel** | **Z-28 (Ref.)** | **Z-29** | **Z-30** |
|---|---|---|---|
| **Komponente K1:** | | | |
| Polymer **P1** | 6.0 | 6.0 | 6.0 |
| Polymer **P4** | 18.0 | 18.0 | 18.0 |
| Aldimin **A1** | 1.53 | 1.53 | 1.53 |
| Verdickerpaste | 24.0 | 24.0 | 24.0 |
| calciniertes Kaolin | 15.0 | 15.0 | 15.0 |
| Titandioxid | 4.0 | 4.0 | 4.0 |
| pyrog. Kieselsäure | 3.0 | 3.0 | 3.0 |
| DBTDL | 0.1 | 0.1 | 0.1 |
| Salicylsäure 5% | 1.5 | 1.5 | 1.5 |

| **Komponente K2:** | | | |
|---|---|---|---|
| Verbindung **V-2** | - | 3.74 | 3.74 |
| TEA | - | 0.25 | - |
| DMDEE | - | - | 1.0 |
| Verhältnis (I) / NCO ¹ | 0.76 | 0.76 | 0.76 |
| Verhältnis (II) / (I) ² | - | 2.2 | 2.2 |
| TFT [min] | 12 | 4 | 4 |
| Zugfestigkeit [MPa] | 2.7 | 3.6 | 3.3 |
| Bruchdehnung [%] | 825 | 655 | 505 |
| E-Modul 5% [MPa] | 2.48 | 2.20 | 3.41 |
| E-Modul 50% [MPa] | 1.51 | 1.70 | 1.83 |
| Shore A | 41 | 42 | 44 |
| Geruch | +++ | 0 | 0 |

| | | | |
|---|---|---|---|
| ¹ Verhältnis der Anzahl Aldimingruppen der Formel (I) zur Anzahl Isocyanatgruppen ² Verhältnis der Anzahl aktivierte Methylengruppen der Formel (II) zur Anzahl Aldimingruppen der Formel (I) | | | |

## Patentansprüche

1. Härtbare Zusammensetzung umfassend
- mindestens ein Isocyanatgruppen-haltiges Polymer,
- mindestens ein Aldimin L mit Aldimingruppen der Formel (I), 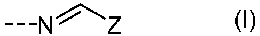 wobei Z für einen organischen Rest mit 1 bis 25 C-Atomen steht, und
- mindestens eine Verbindung V mit aktivierten Methylengruppen der Formel (II), 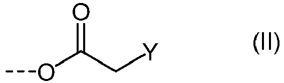 wobei Y für einen Rest der Formel ---CN, 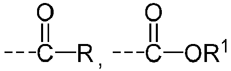 oder 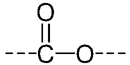 steht, R für einen einwertigen Kohlenwasserstoffrest mit 1 bis 10 C-Atomen steht und R¹ für einen Alkylrest mit 1 bis 6 C-Atomen steht,
wobei bezogen auf die gesamte Zusammensetzung das Verhältnis der Anzahl Aldimingruppen der Formel (I) zur Anzahl Isocyanatgruppen höchstens 1 beträgt und das Verhältnis der Anzahl aktivierte Methylengruppen der Formel (II) zur Anzahl Aldimingruppen der Formel (I) mindestens 1 beträgt.

2. Zusammensetzung gemäss Anspruch 1, **dadurch gekennzeichnet, dass** das Isocyanatgruppen-haltige Polymer einen NCO-Gehalt bezogen auf das gesamte Polymer von 0.5 bis 8 Gewichts-%, bevorzugt 0.75 bis 5 Gewichts-%, insbesondere 1 bis 3 Gewichts-%, hat.

3. Zusammensetzung gemäss einem der Ansprüche 1 oder 2, **dadurch gekennzeichnet, dass** das Isocyanatgruppen-haltige Polymer Polyetherketten mit Repetiereinheiten ausgewählt aus der Liste bestehend aus Oxy-1,2-propylen, Oxy-1,3-propylen, Oxy-1,4-butylen, Oxy-1,2-butylen und Oxyphenylethylen enthält.

4. Zusammensetzung gemäss einem der Ansprüche 1 bis 3, **dadurch gekennzeichnet, dass** Z für einen über ein primäres oder sekundäres C-Atom gebundenen aliphatischen Kohlenwasserstoffrest mit 3 bis 11 C-Atomen oder für einen aromatischen oder heteroaromatischen fünf- oder sechsgliedrigen Ring, der gegebenenfalls substituiert und/oder anelliert ist und insgesamt 4 bis 25 C-Atome umfasst, steht,
wobei Z insbesondere ausgewählt ist aus der Liste bestehend aus 1-Propyl, 2-Propyl, 1-Butyl, 1-Pentyl, 1-Heptyl, 3-Heptyl, 1-Undecyl, Phenyl, 2-Methylphenyl, 3-Methylphenyl, 4-Methylphenyl, 4-Ethylphenyl, 4-Isopropylphenyl, 4-tert-Butylphenyl, 4-C₁₀₋₁₄-Alkylphenyl, 2,5-Dimethylphenyl, 2-Methoxyphenyl, 3-Methoxyphenyl, 4-Methoxyphenyl, 2-Ethoxyphenyl, 3-Ethoxyphenyl, 4-Ethoxyphenyl, 4-Propoxyphenyl, 4-Isopropoxyphenyl, 4-Butoxyphenyl, 4-Pentoxyphenyl, 4-Decyloxyphenyl, 4-Dodecyloxyphenyl, 2,3-Dimethoxyphenyl, 2,4-Dimethoxyphenyl, 2,5-Dimethoxyphenyl, 3,4-Dimethoxyphenyl, 3,5-Dimethoxyphenyl, 2,4,6-Trimethylphenyl, 2,4,5-Trimethoxyphenyl, 2,4,6-Trimethoxyphenyl, 3,4,5-Trimethoxyphenyl, 1-Naphthyl, 2-Naphthyl, 2-Furyl, 5-Methyl-2-furyl, Thiophen, Pyridin, Pyrrol und Chinolin.

5. Zusammensetzung gemäss einem der Ansprüche 1 bis 4, **dadurch gekennzeichnet, dass** das Aldimin L ein Aldimin der Formel (III) ist, 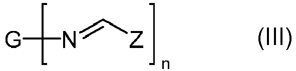
wobei n für 2 oder 3 steht und G für einen n-wertigen organischen Rest mit 2 bis 25 C-Atomen steht,
wobei das Aldimin der Formel (III) insbesondere ausgewählt ist aus der Liste bestehend aus N,N'-Dibenzyliden-1,5-pentandiamin, N,N'-Dibenzyliden-1,6-hexandiamin, N,N'-Dibenzyliden-2-methyl-1,5-pentandiamin, N,N'-Dibenzyli-den-2,2(4),4-trimethyl-1,6-hexandiamin, N,N'-Dibenzyliden-1,3-bis(aminomethyl)cyclohexan, N,N'-Dibenzyliden-1,3-bis(aminomethyl)benzol, N,N'-Diben-zylidenisophorondiamin, N,N'-Dibenzyliden-4,4'-methylen-bis(cyclohexylamin), N,N'-Dibenzylidenpolyoxypropylendiaminen mit mittlerem Molekulargewicht Mₙ von 350 bis 750 g/mol und N,N',N"-Tribenzylidenpolyoxypropy-lentriaminen mit mittlerem Molekulargewicht Mₙ von 450 bis 700 g/mol, sowie den analogen Aldiminen abgeleitet von Tolualdehyd, einem 4-C₁₀₋₁₄-Alkyl-benzaldehyd-Gemisch, 4-Methoxybenzaldehyd und Furfural anstelle von Benzaldehyd.

6. Zusammensetzung gemäss einem der Ansprüche 1 bis 5, **dadurch gekennzeichnet, dass** die Verbindung **V** in Bezug auf die aktivierten Methylengruppen der Formel (II) ein Equivalentgewicht, oder im Fall einer oligomeren oder polymeren Verbindung **V** mittleres Equivalentgewicht, von 100 bis 2'100 g/eq, bevorzugt 114 bis 600 g/eq, insbesondere 114 bis 400 g, und eine Funktionalität, oder im Fall einer oligomeren oder polymeren Verbindung **V** mittlere Funktionalität, von 1 bis 4, bevorzugt 1.5 bis 3.5, insbesondere 1.8 bis 3, aufweist.

7. Zusammensetzung gemäss einem der Ansprüche 1 bis 6, **dadurch gekennzeichnet, dass** bezogen auf die gesamte Zusammensetzung das Verhältnis zwischen der Anzahl aktivierte Methylengruppen der Formel (II) und der Anzahl Aldimingruppen der Formel (I) im Bereich von 1 bis 4, bevorzugt 1.2 bis 3, besonders bevorzugt 1.5 bis 2.5, liegt.

8. Zusammensetzung gemäss einem der Ansprüche 1 bis 7, **dadurch gekennzeichnet, dass** Y für einen Rest der Formel ---CN steht und die aktivierten Methylengruppen der Formel (II) somit Cyanoacetatgruppen sind,
wobei die Verbindung **V** insbesondere ausgewählt ist aus der Liste bestehend aus Ethylcyanoacetat, dem Tricyanoacetat von ethoxyliertem und/oder propoxyliertem 1,1,1-Trimethylolpropan, dem Tricyanoacetat von ethoxyliertem und/oder propoxyliertem Glycerin, Poly(oxy-1,2-propylen)diol-bis(cyanoacetat), Ethylenoxid-Einheiten enthaltendem Poly(oxy-1,2-propylen)diol-bis(cyanoacetat), Dimerfettsäure-basiertem Polyesterdiol-bis(cyanoacetat) und Trimerfettsäure-basiertem Polyestertriol-tris(cyanoacetat).

9. Zusammensetzung gemäss einem der Ansprüche 1 bis 7, **dadurch gekennzeichnet, dass** Y für einen Rest der Formel 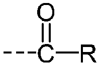 steht, wobei R bevorzugt für Methyl steht und die aktivierten Methylengruppen der Formel (II) somit Acetoacetatgruppen sind,
wobei die Verbindung **V** insbesondere ausgewählt ist aus der Liste bestehend aus Ethylacetoacetat, 1,2-Propandioldiacetoacetat, Dipropylenglykoldiacetoacetat, Tripropylenglykoldiacetoacetat, 1,3-Propandioldiacetoacetat, 1,4-Butandioldiacetoacetat, 2-Methyl-1,3-propandioldiacetoacetat, 1,5-Pentandioldiacetoacetat, Neopentylglykoldiacetoacetat, 1,6-Hexandioldiacetoacetat, Glycerin-diacetoacetat, Glycerin-triacetoacetat, 1,1,1-Trimethylolethan-diacetoacetat, 1,1,1-Trimethylolethan-triacetoacetat, 1,1,1-Trimethylolpropan-diacetoacetat, 1,1,1-Trimethylolpropan-triacetoacetat, dem Triacetoacetat von propoxyliertem und/oder ethoxyliertem 1,1,1-Trimethylolpropan, dem Triacetoacetat von propoxyliertem und/oder ethoxyliertem Glycerin, Poly(oxy-1,2-propylen)diol-bis(acetoacetat), Ethylenoxid-Einheiten enthaltendem Poly(oxy-1,2-propylen)diol-bis(acetoacetat), Rizinusöl-bis(acetoacetat), Rizinusöl-tris(acetoacetat), Dimerfettsäure-basiertem Polyesterdiol-bis(acetoacetat) und Trimerfettsäure-basiertem Polyestertriol-tris(acetoacetat).

10. Zusammensetzung gemäss einem der Ansprüche 1 bis 9, **dadurch gekennzeichnet, dass** mindestens ein Katalysator für die Reaktion zwischen den Methylengruppen der Formel (II) und den Aldimingruppen der Formel (I) enthalten ist, insbesondere ein Stickstoff-haltiger Katalysator.

11. Zusammensetzung gemäss einem der Ansprüche 1 bis 10, **dadurch gekennzeichnet, dass** mindestens ein weiterer Bestandteil ausgewählt aus Füllstoffen, Pigmenten, Weichmachern und Haftvermittlern enthalten ist.

12. Zusammensetzung gemäss einem der Ansprüche 1 bis 11, **dadurch gekennzeichnet, dass** die Zusammensetzung eine Komponente **K1** und eine Komponente **K2** umfasst, welche jeweils für sich allein lagerstabil sind und in voneinander getrennten Gebinden gelagert werden, wobei Isocyanatgruppen-haltige Polymere und Aldimine **L** bevorzugt Bestandteil der Komponente **K1** und Verbindungen **V** und gegebenenfalls ein Katalysator für die Reaktion zwischen den Methylengruppen der Formel (II) und den Aldimingruppen der Formel (I) bevorzugt Bestandteil der Komponente **K2** sind.

13. Zusammensetzung gemäss Anspruch 12, **dadurch gekennzeichnet, dass** die Komponente **K1** das Isocyanatgruppen-haltige Polymer, das Aldimin **L** und zusätzlich mindestens eine Säure enthält.

14. Ausgehärtete Zusammensetzung erhalten aus der härtbaren Zusammensetzung gemäss einem der Ansprüche 1 bis 13 nach dem Vermischen der Inhaltsstoffe oder Komponenten und anschliessendem Aushärten.

15. Verwendung einer Booster-Komponente enthaltend mindestens eine Verbindung V mit aktivierten Methylengruppen der Formel (II), 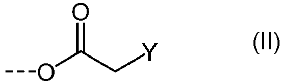
wobei Y für einen Rest der Formel ---CN, 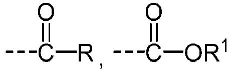 oder 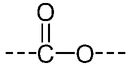 steht, R für einen einwertigen Kohlenwasserstoffrest mit 1 bis 10 C-Atomen steht und R¹ für einen Alkylrest mit 1 bis 6 C-Atomen steht,
zum Aushärten einer einkomponentigen Zusammensetzung enthaltend mindestens ein Isocyanatgruppen-haltiges Polymer und mindestens ein Aldimin **L** mit Aldimingruppen der Formel (I), 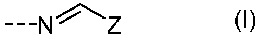
wobei Z für einen organischen Rest mit 1 bis 25 C-Atomen steht, wobei die Booster-Komponente mit einer geeigneten Methode mit der einkomponentigen Zusammensetzung vermischt wird.
